# EUROPÄISCHE PATENTSCHRIFT

(11) **EP 3 873 852 B1**
(45) Veröffentlichungstag und Bekanntmachung des Hinweises auf die Patenterteilung: **30.03.2022**
(21) Anmeldenummer: 19798204.4
(22) Anmeldetag: 29.10.2019
(51) Int. Cl.: C02F 1/00, C02F 1/42, B01J 47/012, B01J 47/026, B01J 49/05

(54) **VORRICHTUNG UND VERFAHREN ZUR REINIGUNG VON FLUIDEN SOWIE EIN HIERFÜR VORGESEHENER DÜSENEINSATZ UND DEREN VERWENDUNG**
APPARATUS AND PROCESS FOR CLEANING FLUIDS, AND A NOZZLE INSERT PROVIDED FOR THIS PURPOSE, AND ITS USE
DISPOSITIF ET PROCÉDÉ DE PURIFICATION DES FLUIDES ET INSERT DE BUSE PRÉVU À CET EFFET, E SON UTILIZATION

(30) Priorität: 30.10.2018 DE 102018127027
(43) Veröffentlichungstag der Anmeldung: 08.09.2021
(73) Patentinhaber: Zhu, Xiang, Shenzhen (CN)
(72) Erfinder: SCHMIDT, Harald, 56281 Dörth (DE)
(74) Vertreter: Geskes, Christoph
(86) Internationale Anmeldenummer: PCT/EP2019/079466
(87) Internationale Veröffentlichungsnummer: WO 2020/089200

(56) Entgegenhaltungen:
- DE-A1-102015 122 761
- DE-C1- 3 418 102
- US-A- 6 071 405
- US-A1- 2018 065 863

## Beschreibung

Die Erfindung betrifft eine Vorrichtung zur Reinigung zumindest eines Fluids, umfassend eine erste Ionentauschersäule, eine Eingangsleitung und eine Ausgangsleitung. Weiterhin betrifft die Erfindung einen Düseneinsatz für zumindest eine Ionentauschersäule, ein Verfahren zur Deionisierung eines Fluides mittels einer derartigen Vorrichtung sowie eine Verwendung einer derartigen Vorrichtung.

Vorrichtungen zum Reinigen und insbesondere für die Deionisation von Flüssigkeiten sind aus dem Stand der Technik allgemein bekannt. So schreibt die DE 19 32 205 A1 eine Vorrichtung zum Reinigen und Entgiften einer Flüssigkeit, insbesondere Abwasser aus der Galvanik, mit Hilfe von Ionenaustauschern, welche in von der Flüssigkeit zu durchfließenden Behältern untergebracht sind. Unter anderem geht aus der Druckschrift hervor, dass an Behälterrohren, aus denen die zu reinigende Flüssigkeit austritt, im Bereich der Bohrungen je ein ein Behälterrohr umgebender, als Filter und/oder als Düse wirkender Rückhaltekörper für das Zurückhalten des lonentauschermittels vorgesehen ist.

EP 0 807 605 B1 beschreibt ein Gerät zum Entsalzen und Aufbereiten von Wasser, bei welchem zwei lonentauschersäulen hintereinandergeschaltet sind, von welchen die eine mit Anionentauschharz und die andere mit Kationentauschharz gefüllt ist. Innerhalb der Säulen sind bis zum Boden reichende Senkrohre vorgesehen. Die beiden lonentauschersäulen sind in einem gemeinsamen, dicht verschlossenen Gehäuse angeordnet. Die Säulen bestehen aus einer zylindrischen Wandung, die am unteren Ende durch den Boden des Gehäuses und am oberen Ende durch die obere Abschluswand des Gehäuses abgeschlossen sind. Die obere Abschluswand weist im Bereich der Säulen, konzentrisch zu diesen, je eine Ausnehmung auf, in die ein die Säule verschließender Kopf eingesetzt ist. Jeder Kopf ist mit einer Zuleitung für das zu behandelnde Wasser und mit einer Ableitung für das behandelte Wasser versehen. Konzentrisch zum Kopf schließt an die Zuleitung ein Senkrohr an, das bis zum Boden der Säule reicht. Am unteren Ende des Senkrohres ist ein Verteilerkopf angebracht, in welchen das Senkrohr ausmündet und welcher Auslassschlitze zum Ausbringen der zu behandelnden Flüssigkeit in die Säule aufweist. Der Kopf ist weiters mit einem das Senkrohr konzentrisch umgebenden Ringkanal versehen, von welchem die Ableitung ausgeht. Diesem Ringkanal ist ein Sammelkopf vorgeschaltet, der mit radial gerichteten Einlassschlitzen versehen ist. Durch diesen Sammelkopf ist das Senkrohr dicht durchgeführt. Sowohl beim Verteilerkopf als auch beim Sammelkopf sind die Schlitze, in mehreren Ebenen übereinander, also höhenmäßig versetzt, angeordnet, wobei sich der Durchmesser des Verteilerkopfes bzw. des Sammelkopfes stufenmäßig von Ebene zu Ebene nach unten verringert.

DE 10 2015 122 761 A1 beschreibt ein Deionisierungsgerät für Fluide. Dieses Deionisierungsgerät weist eine erste Kammer für ein erstes lonentauschmittel mit einer ersten Eingangsöffnung und einer ersten Ausgangsöffnung auf. Die erste Kammer ist säulenförmig ausgebildet und konzentrisch in einer zweiten Kammer für ein zweites lonentauschmittel angeordnet. Die zweite Kammer ist ebenfalls säulenförmig ausgebildet und weist eine zweite Eingangsöffnung und eine zweite Ausgangsöffnung auf. Die erste Kammer und die zweite Kammer sind durch eine Leitung verbunden. Diese Leitung weist eine dritte Eingangsöffnung und eine dritte Ausgangsöffnung auf. Die dritte Eingangsöffnung ist der ersten Ausgangsöffnung zugeordnet. Die dritte Ausgangsöffnung ist der zweiten Eingangsöffnung zugeordnet. Zur Deionisierung eines Fluids wird dieses zunächst durch die erste Eingangsöffnung in die erste Kammer eingeleitet. Dort kann eine erste Stufe der Deionisierung durch ein erstes lonentauschmittel, wie beispielsweise ein Kationentauscherharz, erfolgen. Das Fluid kann dann aus der ersten Ausgangsöffnung aus der ersten Kammer austreten. Über die dritte Eingangsöffnung der Leitung kann das ausgetretene Fluid abgeleitet werden. Das Fluid tritt aus der als Überlaufleitung ausgebildeten Leitung durch die dritte Ausgangsöffnung aus und gelangt derart in die zweite Eingangsöffnung der zweiten Kammer. In der zweiten Kammer kann das Fluid durch ein zweites Ionentauschmittel, beispielsweise ein Anionentauscherharz, in einer zweiten Stufe deionisiert werden. Das deionisierte Fluid kann sodann aus der zweiten Ausgangsöffnung der zweiten Kammer zur weiteren Verwendung abgeleitet werden. Das Deionisierungsgerät weist ein umschließendes Gehäuse mit einem Gehäusedeckel auf. Die Leitung ist in diesem Gehäusedeckel angeordnet. Der Gehäusedeckel weist eine Deckeleingangsöffnung zum Einleiten eines Fluids in das Deionisierungsgerät auf. Die Deckeleingangs-öffnung mündet in eine Deckeleingangsleitung, welche zur ersten Eingangsöffnung der ersten Kammer führt. Zur Ableitung des deionisierten Fluids weist der Gehäusedeckel eine Deckelausgangsöffnung auf, die der zweiten Ausgangsöffnung der zweiten Kammer zugeordnet ist. Die erste Eingangsöffnung und die zweite Eingangsöffnung münden jeweils in ein Senkrohr. Diese Senkrohre erstrecken sich vom Gehäusedeckel bis zu einem nichtdargestellten bodenseitigen Bereich des Gehäuses. Um ein Austreten der lonentauschmittel zu verhindern, sind am Gehäusedeckel Einsätze angeordnet, welche den jeweiligen Ausgangsöffnungen, der Kammern zugeordnet sind.

Aufgabe der Erfindung ist es, die aus dem Stand der Technik bekannten Vorrichtungen zur Reinigung von Fluiden, insbesondere Deionisationsgeräte, zu verbessern.

Die Aufgabe wird erfindungsgemäß durch die Gegenstände der unabhängigen Ansprüche gelöst.

Weitere vorteilhafte Ausgestaltungen sind der nachfolgenden Beschreibung, den Figuren sowie den Unteransprüchen zu entnehmen. Die einzelnen Merkmale der beschriebenen Ausgestaltung sind jedoch nicht auf diese beschränkt, sondern können untereinander und mit anderen Merkmalen zur weiteren Ausgestaltung verknüpft werden.

Die Erfindung schlägt gemäß einem ersten Aspekt eine Vorrichtung zur Reinigung zumindest eines Fluids vor, umfassend zumindest eine erste Ionentauschersäule, eine Eingangsleitung und eine Ausgangsleitung. Die Eingangsleitung und die Ausgangsleitung sind jeweils einem ersten Deckelteil zugeordnet, wobei die Eingangsleitung mit einer ersten Zuleitung in einen ersten Freiraum zwischen einem Bodenteil der Vorrichtung und mindestens einen Düseneinsatz verbunden ist, der als ein erster Bodendüseneinsatz ausgebildet ist. Der erste Bodendüseneinsatz weist eine Anzahl von Öffnungen zur Durchleitung des Fluids auf, die über zumindest eine Teilfläche des ersten Bodendüseneinsatzes verteilt sind und mittels derer das Fluid in ein mit einem lonentauscherharz befüllbares erstes Volumen der lonentauschersäule einleitbar ist. Der erste Bodendüseneinsatz umfasst zumindest zwei Segmente, die aneinander befestigt sind. Außerdem ist spezifiziert, dass zumindest ein Segment zumindest einen Rand und/oder zumindest einen Vorsprung aufweist, um eine stabile Anordnung der Segmente durch Formschluss zu ermöglichen, und/oder dass der erste Bodendüseneinsatz zumindest ein Verbindungsstück aufweist und zumindest zwei Segmente mittels des Verbindungsstücks aneinander befestigt sind. Soweit im Sinne der vorliegenden Erfindung der Begriff "Anzahl" in Bezug auf die Öffnungen eines Düseneinsatzes verwendet ist, sind hierunter mindestens zwei Öffnungen in diesem Düseneinsatz zu verstehen, bevorzugt 2, 3, 4, 5, 6, 7, 8, 9, 10, 15, 20, 25, 30, 35, 40, 45, 50, 55, 60, 65, 70, 75, 80, 85, 90, 95, 100, 110, 120, 130, 140, 150, 160, 170, 180, 190, 200.

Vorteil an der vorgeschlagenen Erfindung ist, dass die Verteilung des Fluides in der Ionentauschersäule gleichmäßig erfolgt und insbesondere keine Toträume beim Durchströmen des Fluides der lonentauschersäule entstehen. Unter Toträumen im Sinne der Erfindung sind Bereiche zu verstehen, die nicht oder nur im Vergleich zu anderen Bereichen einen sehr geringen, zumindest etwa 30 % bis etwa 100 %, bevorzugt zumindest etwa 50 % bis etwa 100 %, weiter bevorzugt etwa 90 % bis etwa 100 % geringeren Durchfluss aufweisen als beispielsweise die Eintrittsstellen des Fluides in die Ionentauschersäule.

Bei einer Ausführungsform dieses Aspekts ist spezifiziert, dass die zumindest zwei Segmente ringabschnittsförmig oder kreisabschnittsförmig sind.

Wird im Rahmen der Erfindung der Begriff "etwa" insbesondere für Werte oder Wertbereiche verwendet, so ist darunter ein Toleranzbereich zu verstehen, den ein Fachmann als üblich erachtet. Insbesondere ist ein Toleranzbereich von ±10 %, bevorzugt ±5 % darunter zu verstehen. Wird im Rahmen der Erfindung der Begriff "im Wesentlichen" verwendet, ist damit ein Toleranzbereich zu verstehen, der für den Fachmann unter wirtschaftlichen und technischen Gesichtspunkten vertretbar ist, so dass das Merkmal noch als solches zu erkennen ist.

Die Vorrichtung weist besonders bevorzugt mehrere Düseneinsätze, besonders bevorzugt zumindest zwei Düseneinsätze, auf. An dem Deckelteil ist vorzugsweise mindestens ein erster, als Deckeldüseneinsatz ausgebildeter Düseneinsatz angeordnet. Im Bereich des Bodens der Vorrichtung ist vorzugsweise zumindest ein erster als Bodendüseneinsatz für die erste lonentauschersäule ausgebildeter Düseneinsatz angeordnet. Im Bereich des Bodens der Vorrichtung ist vorzugsweise zumindest ein zweiter, als Bodendüseneinsatz für eine zweite Ionentauschersäule ausgebildeter Düseneinsatz angeordnet, so dass jeder Säule der Vorrichtung ein Bodendüseneinsatz zugeordnet ist. Entsprechend kann die Vorrichtung vorzugsweise auch zumindest einen ersten, und besonders bevorzugt einen ersten und einen zweiten Deckeldüseneinsatz aufweisen. Die vorbeschriebenen Deckeldüseneinsätze können jeweils am Deckelteil angeordnet sein. Die vorbeschriebenen Bodendüseneinsätze können jeweils am Bodenteil angeordnet sein.

In einer alternativen Ausgestaltung ist vorgesehen, dass ein Düseneinsatz zumindest teilweise wellenförmig ausgestaltet ist. Insbesondere ist in einer weiteren Variante vorgesehen, dass Wellen zumindest teilweise konzentrisch ausgebildet sind. Der Düseneinsatz kann beispielsweise zumindest eine Nut als Welle aufweisen. Der Düseneinsatz kann vorzugsweise mehrere konzentrisch angeordnete, ringförmige Nuten aufweisen. Die Wellenform erlaubt eine großflächige Verteilung der Öffnungen und insbesondere, eine große Anzahl von Öffnungen in den Düseneinsatz einzubringen. In einer Ausgestaltung ist vorgesehen, dass die Wellen zumindest teilweise einen etwa rechteckigen oder trapezförmigen Querschnitt aufweisen. Auch ein in etwa dreieckiger Querschnitt ist möglich. So kann gemäß einer weiteren Ausführungsform auch vorgesehen sein, dass die Öffnungen zumindest an Flanken der Wellen und/oder zumindest auf Wellenkämmen angeordnet sind. Besonders bevorzugt ist eine Ausgestaltung, bei der die Öffnungen an den Flanken der Wellen angeordnet sind. Durch die in einer weiteren Ausgestaltungsform vorgesehene im Wesentlichen gegenüberliegende Anordnung der Öffnungen an den Flanken der Wellenform kommt es zu einer Strömungseigenschaft, insbesondere einer Turbulenz, der Strömung, die eine weitere vorteilhafte Verteilung in der lonentauschersäule beziehungsweise beim Eintritt in die lonentauschersäule mit sich bringt. Durch die beschriebene Einbringung des Fluides in die lonentauschersäule wird diese beziehungsweise das in der lonentauschersäule befindliche lonentauscherharz vorzugsweise gleichmäßig durchströmt beziehungsweise umströmt.

Der Düseneinsatz umfasst zumindest zwei Segmente. Die Segmente sind ringabschnittsförmig ausgebildet. Diese Segmente können auch kreisabschnittsförmig, beispielsweise "tortenstückförmig", ausgebildet sein. Die Segmente können vorzugsweise direkt oder mittelbar aneinander befestigt werden. Der Düseneinsatz beziehungsweise das Segment kann als dünne Platte ausgebildet sein. Der Düseneinsatz und/oder das Segment können vorzugsweise etwa 1 bis 4 Millimeter dünn sein.

Zumindest ein Segment ist vorzugsweise plattenartig ausgebildet. Das Segment weist vorzugsweise zumindest eine flächige Oberseite und eine flächige Unterseite auf. Das Segment weist vorzugsweise zumindest zwei gerade Stirnseiten und zwei gekrümmte Längsseiten auf, die die Oberseite und die Unterseite umrahmen. Die Stirnseiten dienen zur Anordnung der Segmente aneinander. Beispielsweise können mehrere Segmente zu einem kreisförmigen Düseneinsatz aneinander angeordnet werden. Vorzugsweise können vier Segmente zu einem kreis- beziehungsweise ringförmigen Düseneinsatz aneinander angeordnet werden. Mehrere Segmente können auch zu Düseneinsatz in Form eines Bogens oder eines offenen Rings angeordnet werden. Beispielweise können zehn Segmente zu einem Düseneinsatz in Form eines offenen Rings angeordnet werden.

Zumindest ein Düseneinsatz und/oder zumindest ein Segment des Düseneinsatzes weist besonders bevorzugt zumindest eine Nut mit einer ersten Seitenwand, einer dieser gegenüberliegenden zweiten Seitenwand und einem die Seitenwände verbindenden Boden auf. Die Nut dient wie die vorbeschriebene wellenförmige Ausgestaltung dazu, die Oberfläche zu vergrößern, um viele Öffnungen für das Fluid anordnen zu können. Entsprechend sind die Öffnungen besonders bevorzugt an der ersten Seitenwand, der zweiten Seitenwand und/oder dem Boden der Nut ausgebildet. Die Nut beziehungsweise die "Welle" kann auch weiche, abgerundete Übergänge zwischen den Boden und den Seitenwänden aufweisen. Die Nut kann keine Kanten aufweisen. Die Nut kann, wie die bei der wellenförmigen Ausgestaltung vorbeschrieben, zumindest teilweise einen etwa rechteckigen oder trapezförmigen Querschnitt aufweisen. Auch ein in etwa dreieckiger Querschnitt ist möglich. Die Nut weist dann im Wesentlichen keinen Boden auf, sondern nur gegenüberliegende Seitenwände.

Die Nut ist vorzugsweise auf einer sogenannten Anströmseite des Düseneinsatzes angeordnet. Bei einem Bodendüseneinsatz ist dies in Bezug auf die normale Strömungsrichtung beim Betrieb der Vorrichtung beispielsweise die Unterseite des Bodendüseneinsatzes. Bei einem Deckeldüseneinsatz ist dies in Bezug auf die normale Strömungsrichtung bei Regeneration der Vorrichtung beispielsweise die Oberseite des Deckeldüseneinsatzes.

Zumindest ein Segment weist vorzugsweise zumindest einen Rand, vorzugsweise zwei Ränder auf, um eine stabile Anordnung der Segmente durch beispielsweise Formschluss an dem Rand beziehungsweise an den Rändern zu ermöglichen. Jedes Segment kann bezogen auf die Krümmung der Segmente, einen ersten inneren Rand aufweisen, der vorzugsweise von einem dem Boden abgewandten Ende der inneren Seitenwand nach außen und parallel zum Boden weg ragt. Jedes Segment kann einen zweiten äußeren Rand aufweisen, der von einem dem Boden abgewandten Ende der äußeren Seitenwand vom Bodendüseneinsatz nach außen und parallel zum Boden weg ragt.

Zumindest ein Segment weist vorzugsweise zumindest einen Vorsprung und besonders bevorzugt zumindest zwei Vorsprünge auf. Diese Vorsprünge dienen wie die vorbeschriebenen Ränder dazu, eine stabile Anordnung der Segmente durch beispielsweise Formschluss zu ermöglichen. Der Vorsprung ist vorzugsweise an der Oberseite der Segmente ausgebildet und ragt von der Oberseite weg. Der Vorsprung ist vorzugsweise im Bereich der Rückseite der Nut ausgebildet. Ein Segment kann vorzugsweise zwei längliche Vorsprünge aufweisen, die jeweils im Bereich der geraden Stirnseiten der Segmente angeordnet sind. Die Segmente eines Düseneinsatzes sind besonders bevorzugt zueinander identisch ausgebildet. Für unterschiedliche Düseneinsätze können unterschiedliche Arten von Segmenten verwendet werden, wobei die sich die Arten der Segmente im Wesentlichen lediglich in der Länge und/oder der Krümmung unterscheiden. Dies gilt entsprechend auch für die nachbeschriebenen Verbindungsstücke für die Segmente.

Der Düseneinsatz weist vorzugsweise zumindest ein Verbindungsstück auf, wobei zumindest zwei Segmente mittels des Verbindungsstücks aneinander befestigt sind. Die Befestigung kann mittelbar erfolgen, wobei das Verbindungsstück direkt an einem Bauteil befestigt ist und die Segmente, vorzugsweise durch Kraft- und/oder Formschluss, zwischen dem Verbindungsstück und dem Bauteil, beispielsweise einer Trägerplatte, zueinander fixiert sind.

Das Verbindungsstück kann zumindest zwei Fußteile aufweisen. Zur Erhöhung der Stabilität und der Standfläche können die Fußteile Verbreiterungen und/oder Verstärkungsstreben aufweisen. An den Fußteilen kann zumindest jeweils eine Befestigungsöse ausgebildet sein. Die Fußteile des Verbindungsstücks können jeweils zumindest eine Aufnahme für zumindest einen der vorbeschriebenen Ränder der Segmente aufweisen. An den Fußteilen sind vorzugsweise jeweils benachbart zu den Aufnahmen Anlageflächen zur Anordnung auf der Trägerplatte ausgebildet.

Die Fußteile sind vorzugsweise mittels eines brückenartigen Stegs verbunden. Der Steg weist vorzugsweise einen umgekehrten im Wesentlichen u-förmigen Querschnitt auf. Der Steg umfasst beispielsweise zumindest zwei seitlich angewinkelte Abschnitte, die an einem Ende mit den Fußteilen verbunden sind und einander gegenüberliegen. Der Steg umfasst ferner beispielsweise zumindest einen Verbindungsabschnitt, der die angewinkelten Anschnitte miteinander verbindet. Der Verbindungsabschnitt umfasst vorzugsweise zwei Stirnseiten. An diesen Stirnseiten sind jeweils besonders bevorzugt zumindest zwei voneinander beabstandete Stützabschnitte angeordnet. An dem Verbindungsabschnitt sind beispielsweise insgesamt vier Stützabschnitte ausgebildet. Die Stützabschnitte können im Wesentlichen als gebogene Quader ausgebildet sein, die von den Stirnseiten des Verbindungsabschnitts hervorstehen. Die Unterseite des Verbindungsabschnitts und der Stützabschnitte dient vorzugsweise als Anlagefläche für die Rückseite des Bodens der Nut der Segmente. Die Stützabschnitte sind derart ausgerichtet, dass im Zusammenbau der Segmente und Verbindungsabschnitte die Öffnungen der Segmente nicht blockiert werden. Das Verbindungsstück kann unterschiedlich lange Stützabschnitte aufweisen. Beispielsweise kann ein Verbindungsstück neben einem Paar lange Stützabschnitte auf einer Stirnseite des Verbindungsstücks, auch ein Paar kurze Stützabschnitte auf der andere Stirnseite aufweisen, so dass das Verbindungsstück an einem Ende eines bogenförmigen Düseneinsatzes angeordnet werden kann, ohne dass die Stützabschnitte unnötig weit vom Ende weg ragen und beispielsweise die Anordnung einer Zuleitung neben dem Düseneinsatz verhindern.

Das Verbindungsstück kann zumindest eine Aufnahme zur Anordnung zumindest eines Vorsprungs eines Segments und/oder zumindest eines Rands eines Segments aufweisen. Die Aufnahme ist vorzugsweise als Aussparung ausgebildet, um eine zumindest teilweise formschlüssige Anordnung zu ermöglichen.

Der Steg kann vorzugsweise zumindest eine Aufnahme für einen Vorsprung, und besonders bevorzugt für zwei Vorsprünge aufweisen. Hierdurch können in der Aufnahme vorteilhafterweise die Vorsprünge zweier benachbart angeordneter Segmente angeordnet werden, um diese Segmente zueinander zu befestigen. Der Düseneinsatz weist besonders bevorzugt zumindest eine Trägerplatte zur Anordnung des Düseneinsatz in der Vorrichtung auf. Die Trägerplatte kann mehrteilig ausgebildet sein. Das bedeutet insbesondere, dass zumindest zwei Trägerplatten verwendet werden können. Beispielsweise kann jeder lonentauschersäule der Vorrichtung zumindest eine Trägerplatte zugeordnet sein, auf der zumindest ein Düseneinsatz anordenbar ist. Im Bereich des Bodens der Vorrichtung kann zumindest eine Trägerplatte für zumindest einen Bodendüseneinsatz verwendet werden. Im Bereich des Deckels kann zumindest eine Trägerplatte für zumindest einen Deckeldüseneinsatz verwendet werden.

Die Verbindungsstücke und/oder die Trägerplatte weisen vorzugweise zumindest jeweils zumindest eine Befestigungsöse, vorzugsweise zumindest zwei Befestigungsösen auf. Die vorgenannten Ösen können zur Durchführung von Stiften, Nieten oder Schrauben ausgebildet sein. Die Ösen können jeweils ein Gewinde aufweisen. Die Verbindungsstücke weisen jeweils besonders bevorzugt zwei Ösen auf. Die Trägerplatte kann eine entsprechende Anzahl von Ösen je nach Anzahl der Ösen der zugeordneten Verbindungstücke aufweisen. Ein innerer kreisförmiger Abschnitt der Trägerplatte weist beispielsweise acht Ösen für einen ersten Bodendüseneinsatz mit vier Segmenten und Verbindungsstücken auf. Ein äußerer ringförmiger Abschnitt der Trägerplatte weist beispielsweise zweiundzwanzig Ösen für einen zweiten Bodendüseneinsatz mit 10 Segmenten und 10 Verbindungsstücken auf.

Die Trägerplatte weist zur verrutschsicheren Anlage zumindest eines Düseneinsatzes zumindest eine Nut, vorzugsweise zwei Paar Nuten für korrespondierende Vorsprünge der Düseneinsätze beziehungsweise der vorbeschriebenen Segmente auf. Ein Paar Nuten kann beispielsweise in Form von konzentrischen Kreisen auf der Trägerplatte angeordnet sein. Ein Paar Nuten kann beispielsweise in Form von parallel verlaufenden Kreisabschnitten auf der Trägerplatte angeordnet sein.

Der Düseneinsatz kann zumindest ein Endstück, vorzugsweise zwei Endstücke aufweisen. Das Endstück ist zur Anlage an eine Stirnseite eines Segments ausgebildet. Mittels zweier Endstücke ist ein beispielsweise bogenförmiger Düseneinsatz seitlich verschließbar, so dass Fluid nur über die Öffnungen des Segments, beziehungsweise der Segmente, von einem Freiraum zwischen dem Düseneinsatz und der Trägerplatte ein- oder ausströmen kann. Vorzugsweise ist das Endstück derart angeordnet, dass dieses gegenüberliegende Nuten der Trägerplatte quasi verbindet.

Die Trägerplatte ist vorzugsweise als gemeinsame Trägerplatte für zumindest zwei Düseneinsätze, beispielsweise für zwei Bodendüseneinätze oder zwei Deckeldüseneinsätze, ausgebildet. Die Trägerplatte kann beispielsweise als ein Zwischenboden ausgebildet sein, der vom einem Boden, einem Bodendeckel des Bodenteils, einer Oberseite des Deckteils oder einer Abdeckplatte des Deckelteils beabstandet ist. Die Trägerplatte ist vorzugsweise einstückig mit dem Bodenteil ausgebildet. Die Vorrichtung kann ferner eine Trägerplatte aufweisen, die einstückig mit dem Deckelteil ausgebildet ist. Zur Erhöhung der Stabilität kann die Trägerplatte eine Verrippung aufweisen. An der Trägerplatte können Leitungen angeordnet sein. Die Verrippung und/oder die Leitungen sind vorzugsweise auf einer den lonentauschersäulen abgewandten Seite der Trägerplatte angeordnet. Beispielsweise kann die Trägerplatte des Deckelteils oberseitig eine Verrippung, eine Überströmleitung von der ersten zur zweiten Ionentauschersäule, eine Eingangsleitung zur ersten lonentauschersäule und eine Ausgangsleitung von der zweiten lonentauschersäule aufweisen. Die Trägerplatte des Bodenteils kann beispielsweise unterseitig eine Verrippung, eine erste Leitung von einem Anschlussstutzen für eine Zuleitung zu einer Öffnung beziehungsweise zu einem Auslass in der Trägerplatte und eine zweite Leitung von einem Anschlussstutzen für eine weitere Zuleitung zu einer weiteren Öffnung beziehungsweise zu einem weiteren Auslass in der Trägerplatte aufweisen.

Zur Gewährleistung einer Trennung von mindestens zwei lonentauschersäulen der Vorrichtung kann die Trägerplatte oder das Bodenteil zumindest eine Trennwand oder eine Anlagefläche zur Anordnung einer Trennwand aufweisen. Die Trägerplatte kann vorzugsweise eine innere ringförmige Trennwand und eine äußere ringförmige Trennwand aufweisen. Die Trennwand ist vorzugweise einstückig mit der Trägerplatte ausgebildet. Das Deckelteil oder eine in diesem Bereich angeordnete Trägerplatte kann wie vorbeschrieben ausgebildet sein und auch zumindest eine Trennwand oder eine Anlagefläche für eine Trennwand aufweisen.

Die Trägerplatte weist vorzugsweise zumindest zwei Durchflussöffnungen je zugeordneten Düseneinsatz auf. Die Durchflussöffnungen können jeweils einen Anschlussstutzen zur Anordnung einer Zuleitung aufweisen. Die Durchflussöffnungen können jeweils zumindest einen Auslass für das Fluid aufweisen. Die Durchflussöffnungen sind für eine einfache Herstellung vorzugsweise rund ausgebildet. Eine gemeinsame Trägerplatte für zwei Düseneinsätze weist vorzugsweise zwei Paar Durchflussöffnungen auf.

Eine gemeinsame Trägerplatte für zwei Bodendüseneinsätze kann beispielsweise einen inneren kreisförmigen Abschnitt für einen ersten Bodendüseneinsatz und die erste Ionentauschersäule sowie einen äußeren ringförmigen Abschnitt für einen zweiten Bodendüseneinsatz und die zweite lonentauschersäule aufweisen. Im inneren und im äußeren Abschnitt der Trägerplatte können jeweils zwei Durchflussöffnungen ausgebildet sein. Hierbei ist jeweils eine Durchflussöffnung vorgesehen, um Fluid in den Freiraum zwischen dem jeweiligen Abschnitt der Trägerplatte und dem Bodenteil, der Bodenplatte, der Deckeloberseite oder der Abdeckplatte der Vorrichtung zu leiten. Die zweite Durchflussöffnung ist als Auslass vorgesehen, um Fluid in den Freiraum zwischen dem Düseneinsatz und dem Bodenteil oder dem Deckelteil zu leiten. Dieser Freiraum kann beispielsweise zwischen einer Nut an der Anströmseite der Segmente und dem jeweiligen Trägerplattenabschnitt bereitgestellt werden. Aus den Schlitzen auf einer Abströmseite der Segmente kann das Fluid dann gleichmäßig in die jeweilige lonentauschersäule strömen.

Im Deckelteil kann in ähnlicher Weise eine von der geschlossenen Oberseite des Deckels beabstandete Trägerplatte angeordnet sein.

Die Trägerplatte kann Ausbuchtungen aufweisen, die ein Klemmen der Trägerplatte in der Vorrichtung, insbesondere am Bodenteil und/oder am Deckel ermöglichen. Die Trägerplatte kann beispielsweise in die Vorrichtung eingesetzt und dort verklemmt und/oder verklebt werden. Besonders bevorzugt weist das Bodenteil und/oder das Deckelteil eine Trägerplatte auf, die jeweils einstückig mit dem Bodenteil oder dem Deckelteil ausgebildet ist.

Die Vorrichtung umfasst im Bodenbereich beispielsweise einen ersten Bodendüseneinsatz für das ersten Volumen und einen zweiten Bodendüseneinsatz für das zweite Volumen. Diese Bodendüseneinsätze sind vorzugsweise mittels vorbeschriebenen Verbindungsstücken auf einer gemeinsamen Trägerplatte befestigt. Der erste Bodendüseneinsatz ist beispielsweise in einem inneren kreisförmigen Abschnitt der Trägerplatte angeordnet und der zweite Bodendüseneinsatz ist beispielsweise in einem äußeren ringförmigen Abschnitt der Trägerplatte angeordnet.

In einer weiteren Ausgestaltung ist vorgesehen, dass die Öffnungen zumindest teilweise in einer Strömungsrichtung einen sich verengenden Querschnitt aufweisen. Jede dieser Öffnungen ist bevorzugt, insbesondere bei einem regulären Betrieb der Vorrichtung als Düse ausgestaltet. Dies hat den Vorteil, dass sich die Strömungsgeschwindigkeit des Fluides im Bereich des Bodendüseneinsatzes wesentlich vergrößert, so dass ein gleichmäßiger und einfacherer Durchsatz des Fluides durch das in der lonentauschersäule vorhandene Ionentauschermaterial, insbesondere Harz, vollzogen wird. Gemäß einer Ausgestaltung ist vorgesehen, dass die Öffnungen zumindest auf einer Abströmseite des Düseneinsatzes schlitzförmig ausgestaltet sind. Unter der Abströmseite ist die Seite des Düseneinsatzes zu verstehen, der bei einem regulären Betrieb stromabwärts des Fluides angeordnet ist. Die Öffnungen verengen sich in der Strömungsrichtung also zu Schlitzen.

In einer weiteren Ausführungsform ist vorgesehen, dass dem Deckelteil mindestens ein erster Deckeldüseneinsatz zugeordnet ist. Vorzugsweise ist der Deckeldüseneinsatz weitgehend identisch, zumindest aber funktional identisch zu dem Bodendüseneinsatz aufgebaut, wobei in einer Ausgestaltung der Deckeldüseneinsatz, insbesondere bei regulärem Betrieb der Vorrichtung, als Diffusor wirkt. Hingegen wirkt gemäß einer Ausgestaltung bei einem Regenerierungsdurchlauf, bei dem Regenerierungsflüssigkeit entgegengesetzt der Flussrichtung, die bei einem regulären Betrieb der Vorrichtung vorgesehen ist, durch die Vorrichtung geleitet wird, der Deckeldüseneinsatz als Düse. Eine vorzugsweise gleichmäßige und totraumfreie Durchströmung des Regenerierungsmittels durch den lonentauscher wird so ermöglicht.

In einer besonders bevorzugten Ausgestaltung ist vorgesehen, dass die Vorrichtung zumindest zwei ineinander geschachtelte lonentauschersäulen aufweist. Die Vorrichtung mit zwei lonentauschersäulen ist gemäß einer weiteren Ausgestaltung derart ausgestaltet, dass ein Bodenteil und ein Deckelteil von der Vorrichtung umfasst sind, wobei zwischen dem Bodenteil und dem Deckelteil zumindest ein Innenrohr und ein Außenrohr angeordnet ist, wobei das Innenrohr im Außenrohr angeordnet ist. Eine erste lonentauschersäule umfasst somit das erste Volumen des Innenrohrs und eine zweite lonentauschersäule umfasst ein zwischen Innenrohr und Außenrohr vorhandenes zweites Volumen. In einer weiteren Variante ist vorgesehen, dass das Deckelteil eine Eingangsleitung, die mit einer ersten Zuleitung verbunden ist, und eine Ausgangsleitung aufweist. Das Deckelteil umfasst eine Überströmleitung, die das erste Volumen mit dem zwischen Innenrohr und Außenrohr vorhandenen zweiten Volumen verbindet. Die Überströmleitung ist in einer Ausgestaltung mit einer zweiten Zuleitung verbunden. Die Überströmleitung weist zwei verschließbare Ausnehmungen auf, wobei eine erste Ausnehmung dem ersten Volumen und eine zweite Ausnehmung dem zweiten Volumen zugeordnet ist. Vorteilhafterweise kann mit der vorgeschlagenen Ausführung der Vorrichtung eine kompakte Einheit für die Deionisierung von Wasser zur Verfügung gestellt werden. Insbesondere kann die Vorrichtung transportabel, beispielsweise auf Rollen bewegbar, ausgestaltet sein.

Die Erfindung schlägt gemäß einem zweiten Aspekt einen Düseneinsatz für zumindest eine lonentauschersäule vor, wobei der Düseneinsatz eine Anzahl von Öffnungen aufweist, die über zumindest eine Teilfläche des Düseneinsatzes verteilt sind und mittels derer ein Fluid in die lonentauschersäule einleitbar ist. Der Düseneinsatz umfasst zumindest zwei ringabschnittsförmige oder kreisabschnittsförmige Segmente, die aneinander befestigt sind.

Der Düseneinsatz kann wie ein in Bezug auf die Vorrichtung beschriebener Düseneinsatz ausgebildet sein. Vorzugsweise weisen die Öffnungen einen sich verengenden Querschnitt auf und bilden auf diese Weise Düsenöffnungen. Weiterhin sieht eine Ausführungsform vor, dass die Öffnungen zumindest auf einer Abströmseite schlitzförmig sind. Die Öffnungen verengen sich in der Strömungsrichtung des Fluids also zu Schlitzen. Der Düseneinsatz weist zumindest zwei ringabschnittsförmige oder kreisabschnittsförmige Segmente auf, die aneinander befestigt sind. Der Düseneinsatz weist bevorzugt zumindest eine Trägerplatte auf, wobei die Trägerplatte zumindest zwei Öffnungen zur Durchleitung des Fluids umfasst. Der Düseneinsatz weist zumindest eine Nut mit einer ersten Seitenwand, einer dieser gegenüberliegenden zweiten Seitenwand und einem die Seitenwände verbindenden Boden auf. Die Öffnungen des Düseneinsatzes sind vorzugsweise an der ersten Seitenwand, der zweiten Seitenwand und/oder dem Boden der Nut ausgebildet.

In einer Ausgestaltung ist vorgesehen, dass der Düseneinsatz zumindest eine Aufsatznut aufweist, in die ein Innenrohr einsetzbar ist. Diese Ausgestaltung erlaubt insbesondere die Bildung einer innenliegenden Säule durch das Vorsehen eines Innenrohres, das in die Aufsatznut eingesetzt wird. In einer weiteren Ausführungsform ist vorgesehen, dass der Düseneinsatz eine Anzahl von Aufsatznuten aufweist, in die unterschiedliche Innenrohre mit unterschiedlichen Durchmessern eingesetzt werden können. Auf diese Weise sind unterschiedliche Verhältnisse der Volumina der durch die Rohre gebildeten lonentauschersäulen möglich. Soweit im Sinne der vorliegenden Erfindung der Begriff "Anzahl" in Bezug auf die Aufsatznuten verwendet ist, sind hierunter mindestens zwei Aufsatznuten zu verstehen, bevorzugt 2, 3, 4, 5, 6, 7, 8, 9, 10.

In einer weiteren Ausgestaltung ist vorgesehen, dass die Volumina der Ionentauschersäulen, die vorzugsweise konzentrisch zueinander angeordnet sind, durch zwei Düseneinsätze insbesondere Boden- und/oder Deckeldüseneinsätzen, erzielt werden, die in der Vorrichtung angeordnet werden. Bevorzugt wird eine Anzahl von vorzugsweise jeweils zwei Bodendüseneinsätzen und/oder zwei Deckeldüseneinsätze, die jeweils vorzugsweise konzentrisch ineinander anordenbar sind, in unterschiedlichen Ausgestaltungen für unterschiedliche Verhältnisse der Volumina der beiden lonentauschersäulen in der Vorrichtung angeordnet. Besonders bevorzugt sind die Verhältnisse des ersten Volumens zum zweiten Volumen etwa 1:2, etwa 2:1, etwa 2:3 oder etwa 3:2. In einer besonders bevorzugten Ausgestaltung ist vorgesehen, dass die Düseneinsätze als Ersatzteile beziehungsweise Austauschteile vorgesehen sind.

Die Erfindung schlägt gemäß einem dritten Aspekt ein Verfahren zur Deionisierung eines Fluides mittels einer erfindungsgemäßen Vorrichtung vor, wobei das Fluid ohne ein lonentauschen durch die erste Zuleitung durch das mit einem lonentauscherharz befüllte erste Volumen durchgeleitet wird, wobei das Fluid dann anschließend in das erste Volumen zum lonentauschen eingeleitet wird.

Hierdurch ist ein besonders kompaktes lonentauschen mit gleichmäßiger Durchströmung im Vergleich zu einer direkten unmittelbaren Einleitung in das Volumen möglich. Mittels des Verfahrens kann das Fluid beispielsweise unter das Volumen, beispielsweise in einen Freiraum der Vorrichtung, geleitet werden und dann von unten über den Bodendüseneinsatz zurück in das Volumen eingeleitet werden, so das dass Fluid dann gleichmäßig im Volumen von unten nach oben aufsteigt.

In einer Ausführungsform ist vorgesehen, dass das Fluid in die Eingangsleitung eingeleitet wird und durch die erste Zuleitung in den ersten Freiraum geleitet wird. Mittels der Öffnungen wird das Fluid in das erste Volumen eingeleitet, so dass das Fluid durch die erste lonentauschersäule strömt.

Mittels der ersten Zuleitung kann das Fluid durch das mit einem lonentauscherharz befüllte erste Volumen ohne ein lonentauschen nach unten in den ersten Freiraum durchgeleitet werden. Durch den ersten Bodendüseneinsatz kann das Fluid dann von unten aus dem Freiraum in das erste Volumen zum lonentauschen eingeleitet werden. Das Fluid kann derart von unten nach oben im ersten Volumen aufsteigen. Der Bodendüseneinsatz sorgt für eine besonders gleichmäßige Einleitung in das erste Volumen.

In einer Ausführungsform ist vorgesehen, dass das Fluid ohne ein lonentauschen durch ein mit einem lonentauscherharz befülltes zweites Volumen einer zweiten lonentauschersäule durchgeleitet wird, wobei das Fluid dann anschließend in das zweite Volumen zum lonentauschen eingeleitet wird.

In einer Ausführungsform ist vorgesehen, dass das Fluid über eine Überströmleitung in eine zweite Zuleitung geleitet wird, wobei die zweite Zuleitung in einen zweiten Freiraum zwischen einem als zweiter Bodendüseneinsatz ausgebildeten Düseneinsatz und dem Bodenteil mündet, wobei der zweite Bodendüseneinsatz eine Anzahl von Öffnungen aufweist, die über zumindest eine Teilfläche des zweiten Bodendüseneinsatzes verteilt sind und mittels derer das Fluid in das zweite Volumen eingeleitet wird, so dass das Fluid durch die zweite lonentauschersäule strömt.

Mittels der zweiten Zuleitung kann das Fluid durch das mit einem lonentauscherharz befüllte zweite Volumen ohne ein lonentauschen nach unten in den zweiten Freiraum durchgeleitet werden. Durch den zweiten Bodendüseneinsatz kann das Fluid dann von unten aus dem Freiraum in das zweite Volumen zum lonentauschen eingeleitet werden. Das Fluid kann derart von unten nach oben im zweiten Volumen aufsteigen.

Die Überströmleitung ist vorzugswiese im Deckelteil der Vorrichtung angeordnet. Weiterhin ist bevorzugt vorgesehen, dass das Fluid von einer zentrisch angeordneten lonentauschersäule über die Überströmleitung in eine radial außen angeordnete lonentauschersäule geleitet wird.

Der Vorteil an der Leitung des Fluides von dem Bodenteil hin zum Deckelteil, also von unten nach oben, ist auch, dass eine Gasbildung beziehungsweise eine Ansammlung von Gas in der lonentauschersäule vermieden wird und insbesondere über den Deckel abgeführt werden kann. Eventuell sich im Bodenteil oder in der lonentauschersäule bildendes Gas wird durch die Strömung von unten nach oben leicht mitgerissen.

Die Erfindung schlägt gemäß einem vierten Aspekt eine Verwendung einer erfindungsgemäßen Vorrichtung zur Deionisierung eines Fluides vor.

Bei einer Ausführungsform dieses Aspekts ist spezifiziert, dass
- das Fluid ohne ein lonentauschen durch das mit einem lonentauscherharz befüllte erste

Volumen geleitet wird,
- das Fluid dann anschließend in das erste Volumen zum Ionentauschen eingeleitet wird.

Die Erfindung schlägt gemäß einem fünften Aspekt eine Verwendung einer erfindungsgemäßen Vorrichtung in einem erfindungsgemäßen Verfahren vor.

Gemäß einer ersten besonders bevorzugten ersten Ausführungsform der Vorrichtung weist diese vier wellenförmige Düseneinsätze auf. Diese umfassen zwei Deckeldüseneinätze und zwei Bodendüseneinsätze. Ferner weist die Vorrichtung eine Eingangsleitung und eine Ausgangsleitung auf. Die Eingangsleitung ist mit einer ersten Zuleitung verbunden. Die Ein- und Ausgangsleitungen sind an einem Deckelteil angeordnet. Zwischen Bodenteil und Deckelteil sind ein Außenrohr und ein Innenrohr angeordnet. Diese definieren ein erstes und ein zweites Volumen für unterschiedliche lonentauscherharze. Im Deckelteil ist zudem eine Überströmleitung zwischen dem ersten und dem zweiten Volumen angeordnet. Nach unten sind die Volumina durch zwei Bodendüseneinsätze abgeschlossen. Die Bodendüseneinsätze weisen jeweils eine Anzahl von Wellen auf. An Wellenflanken sind Öffnungen vorgesehen, durch die das zu reinigende Fluid strömen kann. Die Öffnungen verengen sind von der Unterseite der Bodendüseneinsätze zur Oberseite zu Schlitzen. Die Öffnungen verengen sich damit in der Strömungsrichtung des Fluids. Das Fluid strömt durch eine erste Zuleitung aus dem Auslass in einen ersten Freiraum zwischen dem ersten Bodendüseneinsatz und dem Bodenteil und von dort aus den Öffnungen beziehungsweise Schlitzen des ersten Bodendüseneinsatzes in das erste Volumen hinein. Nach dem Durchtritt durch die Öffnungen des ersten Deckeldüseneinsatzes strömt es durch die Überströmleitung in eine zweite Zuleitung und dann in einen Freiraum zwischen dem zweiten Bodendüseneinsatz und dem Bodenteil. Dann strömt das Fluid durch die Öffnungen des zweiten Bodendüseneinsatzes in das zweite Volumen. Das Fluid steigt auf und strömt durch die Öffnungen des zweiten Deckeldüseneinsatzes zur Ausgangsleitung. Die Deckeldüseneinsätze sind derart in der Vorrichtung angeordnet sind, dass diese als Düsen wirken, wenn die Regenerationsflüssigkeit entgegen der Stromrichtung der regulären zu deionisierenden Flüssigkeit die einzelnen lonentauscher durchläuft. Die Schlitze sind bei den Deckeldüseneinsätzen entsprechend auf der Unterseite der Deckeldüseneinsätze angeordnet. Soweit im Sinne der vorliegenden Erfindung der Begriff "Anzahl" in Bezug auf die Wellen verwendet ist, sind hierunter mindestens zwei Wellen zu verstehen, bevorzugt 2, 3, 4, 5, 6, 7, 8, 9, 10.

Die zweite bevorzugte Ausführungsform unterscheidet sich darin von der ersten, dass die Düseneinsätze mehrere ringförmige Segmente mit den Öffnungen umfassen, wobei die Segmente aneinander mittels Verbindungsstücken befestigt sind und darin, dass das Deckelteil und das Bodenteil jeweils eine Trägerplatte zur Anordnung der Düseneinsätze aufweisen.

Die Segmente der Düseneinsätze umfassen jeweils eine Nut mit einer ersten Seitenwand, einer dieser gegenüberliegenden zweiten Seitenwand und einem die Seitenwände verbindenden Boden. Die Öffnungen für das Fluid sind an den Nuten ausgebildet. Die Trägerplatten sind jeweils einstückig mit dem Bodenteil und dem Deckelteil ausgebildet ist. Die Trägerplatte des Bodenteils weist jeweils einen inneren kreisförmigen Abschnitt für einen ersten Bodendüseneinsatz sowie einem äußeren ringförmigen Abschnitt für einen zweiten Bodendüseneinsatz auf. Zwischen dem ersten Bodendüseneinsatz und dem Bodenteil ist ein erster Freiraum ausgebildet. Zwischen dem zweiten Bodendüseneinsatz und dem Bodenteil ist ein zweiter Freiraum angeordnet. Wie bei der ersten Ausführungsform münden die Zuleitungen jeweils in diesen Freiräumen. Zur Anordnung des Innenrohrs und des Außenrohrs weist die Trägerplatte eine innere ringförmige Trennwand und eine äußere ringförmige Trennwand auf, die ebenfalls einstückig mit dem Bodenteil ausgebildet sind. Die Trägerplatte und die zwei Deckeldüseneinsätze im Deckelteil sind im Wesentlichen spiegelbildlich zu den Bodendüseneinsätzen angeordnet.

Weitere vorteilhafte Ausgestaltungen gehen aus den nachfolgenden Zeichnungen hervor. Die dort dargestellten Abbildungen sind jedoch nicht beschränkend auszulegen, vielmehr können die dort beschriebenen Merkmale untereinander mit den oben beschriebenen Merkmalen zur weiteren Ausgestaltung kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:
- FIG. 1: eine erste Ausführungsform einer Vorrichtung zur Reinigung von Fluiden in einer Außenansicht;
- FIG. 2: eine Teilansicht der Vorrichtung gemäß FIG. 1 im Schnitt;
- FIG. 3: eine erste Ausführungsform eines Bodendüseneinsatz im Schnitt;
- FIG. 4: den Bodendüseneinsatz gemäß FIG. 3 in einer Ansicht von unten;
- FIG. 5: eine Teilansicht der Vorrichtung gemäß FIG. 1 im Schnitt;
- FIG. 6: eine weitere Teilansicht der Vorrichtung gemäß FIG. 1 im Schnitt;
- FIG. 7: einen Querschnitt durch das Deckelteil der Vorrichtung gemäß FIG. 1;
- FIG. 8: eine weitere Schnittansicht des Deckelteils der Vorrichtung gemäß FIG. 1;
- FIG. 9: einen Querschnitt der Vorrichtung gemäß FIG. 1;
- FIG. 10: eine zweite, erfindungsgemäße Ausführungsform der Vorrichtung;
- FIG. 11: eine Teilansicht eines Längsschnitts durch die Vorrichtung gemäß Figur 10;
- FIG. 12: eine Teilansicht der Vorrichtung gemäß FIG. 10 ohne Außen- und Innenrohr;
- FIG. 13: eine Teilansicht der Vorrichtung gemäß FIG. 12 ohne Bodendüseneinsätze;
- FIG. 14: eine perspektivische Unteransicht eines Segments;
- FIG. 15: eine perspektivische Draufsicht auf das Segment gemäß FIG. 14;
- FIG. 16: eine perspektivische Unteransicht eines Verbindungsstücks;
- FIG. 17: eine perspektivische Draufsicht auf das Verbindungsstück gemäß FIG. 16; und
- FIG. 18: eine Teilansicht der Vorrichtung gemäß FIG. 10 ohne Außen- und Innenrohr.

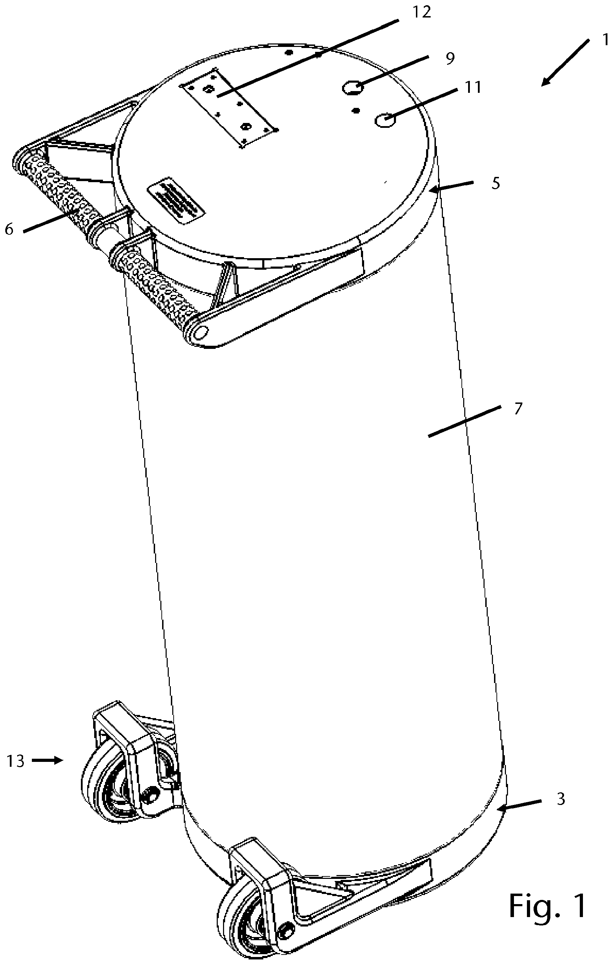

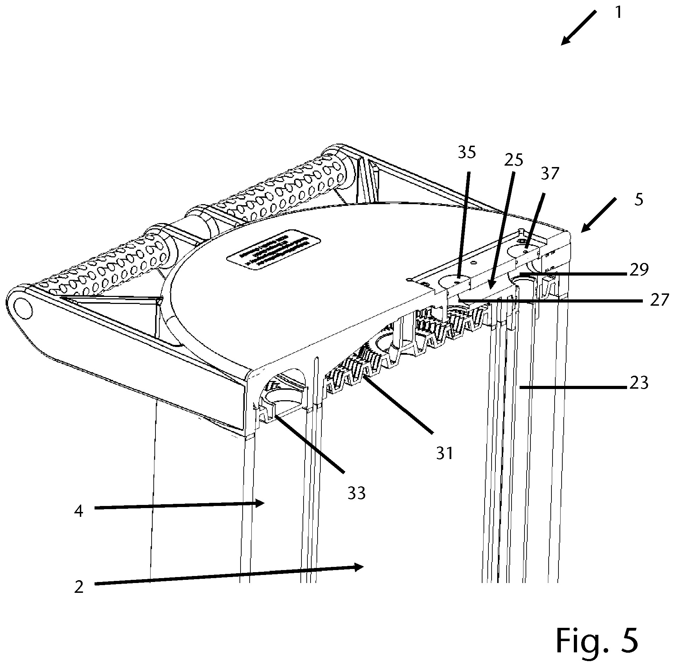

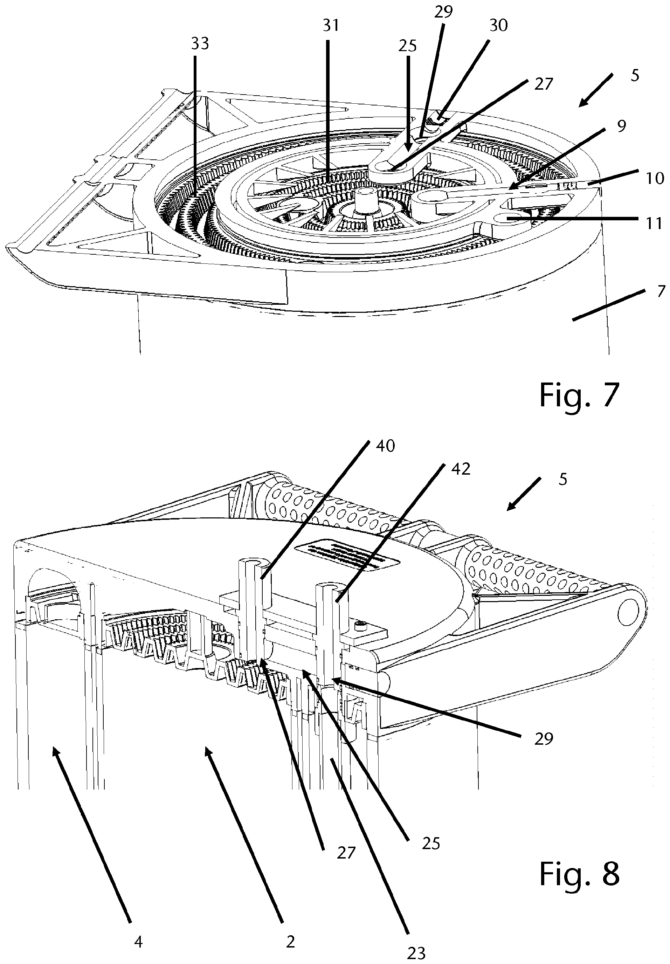

FIG. 1 zeigt eine Außenansicht einer ersten Ausführungsform einer Vorrichtung 1 zur Reinigung von Fluiden mit einer Eingangsleitung 9 und einer Ausgangsleitung 11. In die Eingangsleitung 9 können Fluide wie beispielsweise Wasser eingeleitet werden, die dann deionisiert durch die Ausgangsleitung 11 herausströmen. Vorzugsweise werden hier nicht dargestellte Adapter 40, 42 (FIG. 8) mit an diesen angeordneten Schläuchen und Pumpen verwendet. Ein- und Ausgangsleitung 9, 11 sind an einem Deckelteil 5 angeordnet. Weiterhin ist der FIG. 1 zu entnehmen, dass das Deckelteil 5 eine Typenplatte 12 aufweist, die zwei weitere, hier nicht sichtbare, Ausnehmungen oder Durchgänge 27, 29 (FIG. 5) verdeckt. Das Deckelteil 5 umfasst des Weiteren einen Griff 6, der es einem Benutzer ermöglicht, die Vorrichtung 1 bequem mittels der Rollen 13, die an einem Bodenteil 3 angeordnet sind, zu bewegen. Zwischen Bodenteil 3 und Deckelteil 5 ist ein Außenrohr 7 angeordnet.

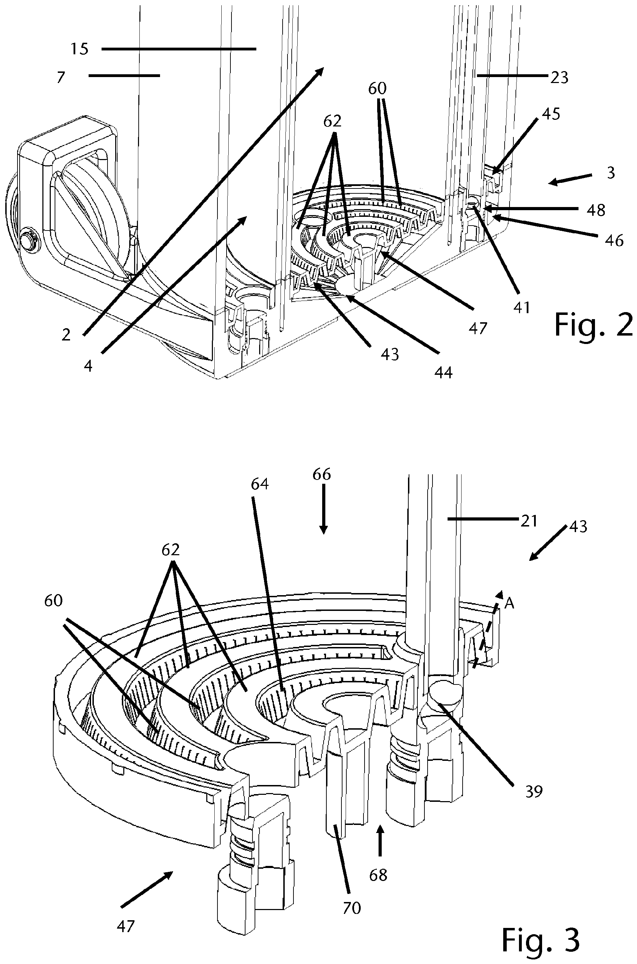

FIG. 2 zeigt eine Teilansicht der Vorrichtung 1 im Bodenbereich, insbesondere ist ein Längsschnitt durch das Bodenteil 3 zu sehen. In dieser Schnittansicht ist zum einen zu erkennen, dass das Außenrohr 7 und das Innenrohr 15 zwei Volumina, namentlich ein erstes Volumen 17 und ein zweites Volumen 19, definieren. Die Volumina 17 und 19 sind mit einem hier der Übersichtlichkeit halber nicht dargestellten lonentauscherharz gefüllt. Vorzugsweise weisen die Volumina 17 und 19 unterschiedliche lonentauscherharze auf.

Nach unten abgeschlossen werden die Volumina 17 und 19 durch zwei Bodendüseneinsätze 43 und 45. Der erste Bodendüseneinsatz 43 und der zweite Bodendüseneinsatz 45 weisen jeweils eine Anzahl von Wellen 62 auf, die einen hier beispielhaft dargestellten trapezförmigen Querschnitt aufweisen. An Wellenflanken 64 sind Öffnungen 60 vorgesehen, durch die das zu reinigende Fluid durch eine zweite Zuleitung 23, hier bespielhaft für das zweite Volumen 19, aus einem Auslass 41 in einen zweiten Freiraum 48 zwischen einem zweiten Bodenbereich 46 und dem zweiten Bodendüseneinsatze 45 strömt.

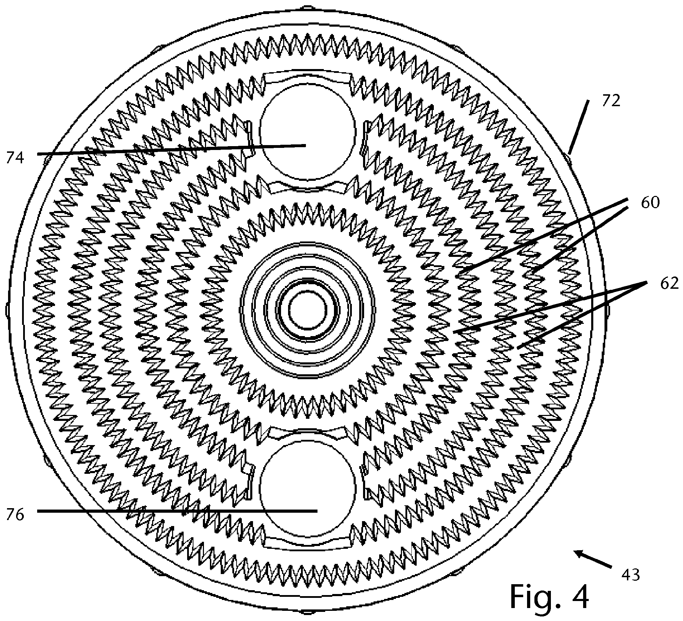

Deutlich sichtbar ist dies beispielsweise in FIG. 3, in der der erste Bodendüseneinsatz 43 des ersten Volumens 17 im Detail dargestellt ist. Das Fluid strömt durch eine erste Zuleitung 21 aus dem Auslass 39 in einen ersten Freiraum 47 unterhalb des ersten Bodendüseneinsatzes 43 heraus. Dort kann sich das Fluid im Bodenteil 3 schnell verteilen. Im Freiraum 47 unterhalb des Bodendüseneinsatzes 43 ist vorzugsweise kein lonentauscherharz vorhanden, so dass die Verteilung des Fluids weitgehend ungestört erfolgt. Da durch die Zuleitung 21 kontinuierlich Fluid zugeführt wird, strömt dieses durch die Öffnungen 60 an den Flanken 64 der Wellen 62 des Bodendüseneinsatzes 43. Die Strömungsrichtung A des Fluids ist mit gestrichelten Pfeilen angedeutet. Die Öffnungen 60 sind, wie in der FIG. 3 ersichtlich, schlitzförmig ausgestaltet und insbesondere, wie auch näher aus FIG. 4 hervorgeht, von einer Anströmseite 68 zu einer Abströmseite 66 verjüngend ausgestaltet. Die Anströmseite 68 weist somit eine andere Geometrie der Flanken 64 auf als die Abströmseite 66 des Bodendüseneinsatzes 43. Das heißt, jede einzelne Öffnung 60 des Bodendüseneinsatzes 43 ist als Düse ausgestaltet. Hierdurch wird die Strömungsgeschwindigkeit an der Abströmseite 66 erhöht, so dass ein verbesserter Eintrag des zu reinigenden Fluides in das hier nicht dargestellte Ionentauscherharz, das im ersten Volumen 17 auf der Abströmseite 66 angeordnet ist, erfolgen kann.

FIG. 4 zeigt den ersten Bodendüseneinsatz 43 in einer Ansicht von der Anströmseite 68. Zu erkennen sind die schon erwähnten düsenförmigen Öffnungen 60 der Wellen 62 als auch Öffnungen 74 und 76, die einerseits eine Zentrierung beziehungsweise Ausrichtung des Bodendüseneinsatzes 43 in der Vorrichtung als auch das Durchtreten der hier in der FIG. 4 nicht dargestellten ersten Zuleitung 21 ermöglichen. Weiterhin ist der FIG. 4 zu entnehmen, dass der Bodendüseneinsatz 43 an seiner radialen Außenseite eine Anzahl von Ausbuchtungen 72 aufweist, die ein Klemmen des Bodendüseneinsatzes 43 entweder in dem Bodenteil 3 oder in dem Innenrohr 15 ermöglichen. Bevorzugt wird der Bodendüseneinsatz 43 in das Bodenteil 3 eingesetzt und dort verklemmt und/oder verklebt. In einer weiteren Ausgestaltung ist vorgesehen, dass die Ausbuchtungen 72 zur Ausrichtung im Bodenteil 3 verwendet werden können. Es versteht sich, dass der zweite Bodendüseneinsatz 45 grundsätzlich gleich oder ähnlich aufgebaut ist, wobei dieser als ein Ring ausgestaltet und an das zweite Volumen 19 angepasst ist. Soweit im Sinne der vorliegenden Erfindung der Begriff "Anzahl" in Bezug auf die Ausbuchtungen verwendet ist, sind hierunter mindestens drei Ausbuchtungen zu verstehen, bevorzugt 3, 4, 5, 6, 7, 8, 9, 10, 11, 12, 13, 14, 15, 16, 17, 18, 19, 20.

FIG. 5 zeigt das Deckelteil 5 in einem Längsschnitt. Unter der hier nicht dargestellten Typenplatte 12 sind zwei Durchgänge 27 und 29 angeordnet, die die Überströmleitung 25 durchgreifen und in jeweils einer lonentauschersäule 2 und 4 münden. Der Durchgang 29, der im äußeren lonentauscher 4 mündet, ist mit der Zuleitung 23 verbunden. Das Fluid, das im Ionentauscher 2 strömt und durch die Ausnehmung 27 und die Überströmleitung 25 in den zweiten lonentauscher 4 eintritt, wird durch die Zuleitung 23 unter den Bodendüseneinsatz 45 geleitet. Zu entnehmen ist der FIG. 5 des Weiteren, dass die Durchgänge 27 und 29 mit zwei Stopfen 35 und 37 verschlossen sind. Die Stopfen 35, 37 können eingeschraubt, eingeklebt oder verschweißt sein. Besonders bevorzugt weisen die Stopfen 35 und 37 Dichtungen auf. In einem Regenerierungsprozess werden die Stopfen 35, 37 geöffnet beziehungsweise aus den Durchgängen 27 und 29 herausgenommen und Adapter 40, 42 (FIG. 8) beziehungsweise Schlauchanschlüsse in die Durchgänge 27 und 29 eingeführt. Bei der Einführung der Adapter40, 42, die nicht in der FIG. 5 gezeigt sind, wird die Überströmleitung 25 verschlossen, so dass durch die Ausnehmung 27 alleinig die lonentauschersäule 2 und durch die Ausnehmung 29 alleinig die lonentauschersäule 4 angeströmt werden kann.

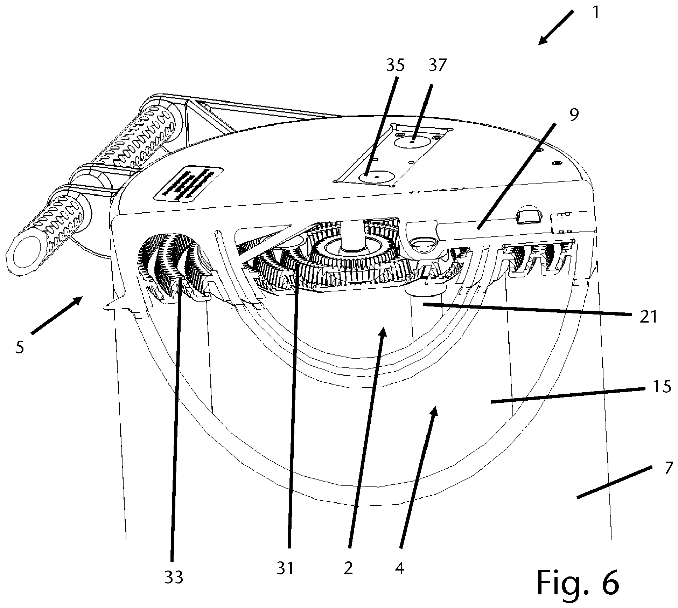

FIG. 6 zeigt einen weiteren Schnitt des Deckelteils 5 der Vorrichtung 1. Zu erkennen ist, dass die Eingangsleitung 9 mit der Zuleitung 21 verbunden ist. Die erste Zuleitung 21 führt das Fluid, was durch die Eingangsleitung 9 strömt, unter den ersten Bodendüseneinsatz 43. Hierauf strömt das Fluid durch den ersten Bodendüseneinsatz 43, welcher der FIG. 6 nicht zu entnehmen ist, und steigt in dem ersten lonentauscher 2 auf bzw. durchströmt diesen von unten nach oben. Nach dem Durchtritt durch den ersten Deckeldüseneinsatz 31 strömt es, wie in FIG. 5 zu erkennen ist, durch die Überströmleitung 25 in die zweite Zuleitung 23 und dann ebenfalls durch den entsprechenden Bodendüseneinsatz 45 und den zweiten lonentauscher 4.

Der FIG. 6 ist auch zu entnehmen, dass die Wandung beziehungsweise das Innenrohr 15 doppelwandig ausgeführt ist. So wird beispielsweise eine Leckage in einer der Wandungen nicht sofort zu einem Durchtritt des Fluides oder der Regenerationsflüssigkeit in den anderen lonentauscher führen. Weiterhin ist den FIG. 5 und 6 zu entnehmen, dass die Deckeldüseneinsätze 31 und 33 derart in der Vorrichtung 1 angeordnet sind, dass diese als Düsen wirken, wenn die Regenerationsflüssigkeit entgegen der Stromrichtung der regulären zu deionisierenden Flüssigkeit die einzelnen lonentauscher 2, 4 durchläuft. Hierdurch ist auch bei der Regenerierung eine gleichmäßige und sichere Durchströmung von Toträumen mit der Regenerierungsflüssigkeit sichergestellt.

Aus FIG. 7 kann entnommen werden, dass, nachdem das Fluid durch den Deckeldüseneinsatz 33 geströmt ist, es aus der Ausgangsleitung 11 strömt.

Bei einem Regenerationsprozess, wenn die Stopfen 35 und 37 entfernt wurden und entsprechende Adapter 40, 42 in die Durchgänge 27 und 29 eingebracht sind, kann ein erster Fluidstrom durch den Durchgang 27 und den lonentaucher 2 hindurch zur Eingangsleitung 9 und ein zweiter Fluidstrom durch die Ausnehmung 29 durch den zweiten lonentauscher 4 hindurch zur Ausgangsleitung 11 beziehungsweise jeweils umgekehrt erfolgen. Auf diese Weise wird ermöglicht, dass unterschiedliche Regenerationsflüssigkeiten die unterschiedlichen lonentauscher 2, 4 beziehungsweise lonentauscherharze durchlaufen, ohne dabei eine Vermengung der Regenerationsflüssigkeiten zu gefährden beziehungsweise zu forcieren. Nach abgeschlossener Regeneration werden die Adapter 40, 42 für die Regenerationsflüssigkeiten aus den Durchgängen 27 und 29 entfernt und neue Stopfen oder die alten Stopfen 35 und 37 in die Durchgänge 27 und 29 eingebracht.

Aus FIG. 7 ist deutlich zu erkennen, wie die Eingangsleitung 9, die Ausgangsleitung 11 und die Überströmleitung 25 im Deckelteil 5 angeordnet sind. Konstruktionsbedingt und für eventuelle Reinigungsarbeiten sind in der Eingangsleitung 9 ein Stopfen 10 und in der Überströmleitung 25 ein Stopfen 30 angeordnet. Es ist zu erkennen, dass, wenn jede lonentauschersäule 2, 4 für sich betrachtet wird, die Eingangsleitung 9 der Vorrichtung 1 die Eingangsleitung der ersten lonentauschersäule 2 darstellt und die Überströmleitung 25 der Vorrichtung 1 die Ausgangsleitung der ersten lonentauschersäule 2 darstellt. Entsprechend stellt die Überströmleitung 25 der Vorrichtung 1 die Eingangsleitung der zweiten lonentauschersäule 4 dar und stellt die Ausgangsleitung 11 der Vorrichtung 1 die Ausgangsleitung der zweiten lonentauschersäule 4 dar. Dies gilt insbesondere für den Regelbetrieb, das heißt, für die Deionisierung von Flüssigkeiten, insbesondere von Wasser.

FIG. 8 zeigt eine weitere Schnittansicht des Deckelteils 5 mit eingesetzten Adaptern 40 und 42 in den Durchgängen 27 und 29. Vorzugsweise werden an den Adaptern 40 und 42 Schläuche angeschlossen, über die die jeweiligen Regenerierungsflüssigkeiten für die unterschiedlichen Deionisierungsharze in den beiden lonentauschersäulen 2 und 4 in die Vorrichtung 1 eingeleitet werden.

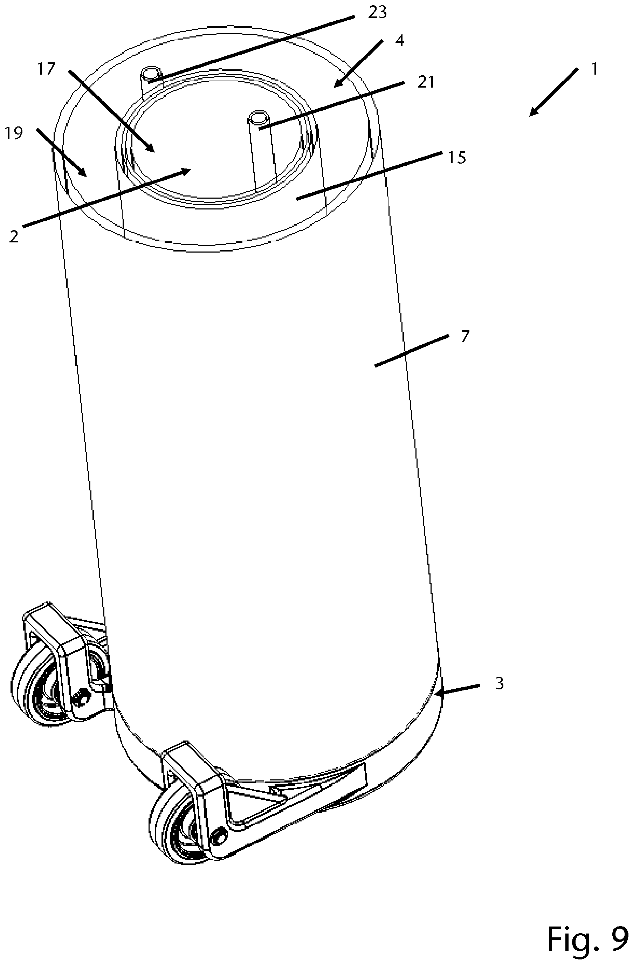

In dem Querschnitt der FIG. 9 ist nochmals dargestellt, wie die einzelnen Ionentauschersäulen 2 und 4 aufgebaut sind. Ebenfalls ist der FIG. 9 zu entnehmen, dass die Zuleitung 21 in dem ersten Volumen 17 der ersten lonentauschersäule 2 verläuft und die Zuleitung 23 in dem zweiten Volumen 19 der zweiten lonentauschersäule 4 verläuft.

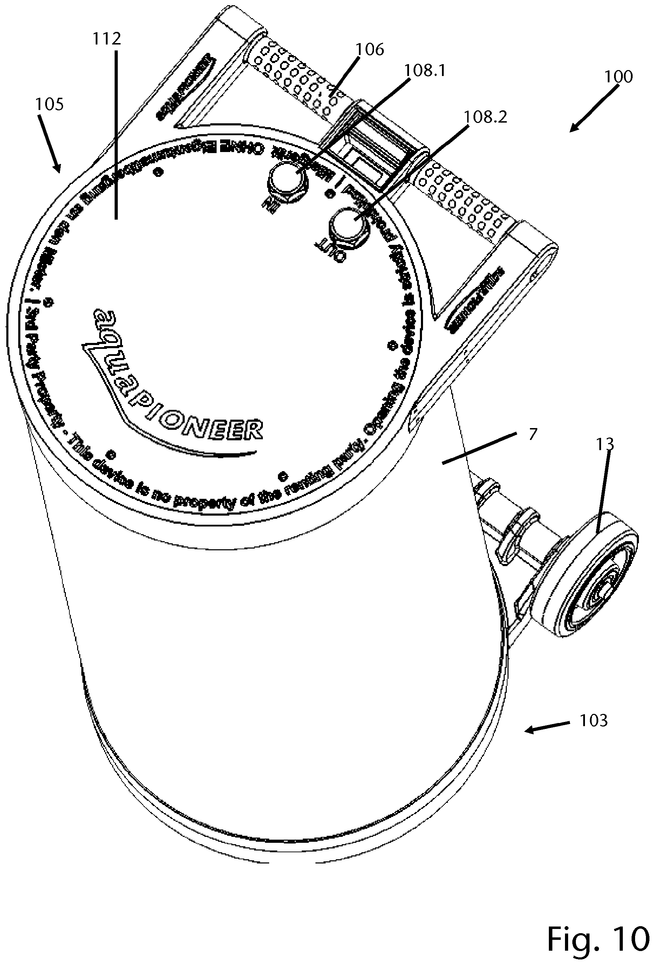

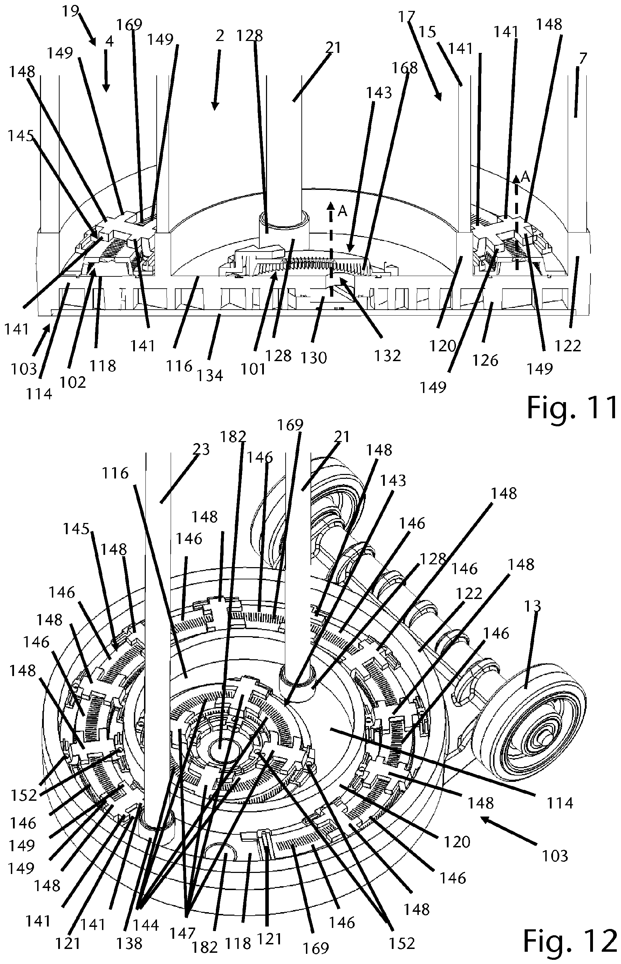

FIG. 10 zeigt, dass die zweite Ausführungsform Vorrichtung 100 sich im Wesentlichen dadurch von der ersten Ausführungsform unterscheidet, dass das Bodenteil 103 und das Deckelteil 105 anders als bei der ersten Ausführungsform der Vorrichtung 1 ausgebildet sind. Das Deckelteil 105 weist eine Abdeckplatte 112 auf, die hier nicht gezeigte Ausnehmungen und Leitungen verdeckt. Wie bei der ersten Ausführungsform der Vorrichtung 1 umfasst das Deckelteil 105 auch einen Griff 106. Ferner umfasst das Bodenteil 103 auch Rollen 13. Zwischen Bodenteil 103 und Deckelteil 105 sind wie bei der ersten Ausführungsform ein Außenrohr 7 und ein nicht gezeigtes Innenrohr 15 (FIG. 11) angeordnet. Die nicht gezeigten Ein- und Ausgangsleitungen im Deckelteil 103 sind jeweils durch Kappen 108 verschlossen.

FIG. 11 zeigt, dass das Bodenteil 103 eine als Zwischenboden ausgebildete Trägerplatte 114 aufweist, die einstückig mit dem Bodenteil 103 ausgebildet ist. Die Trägerplatte 114 weist einen inneren kreisförmigen Abschnitt 116 für einen ersten Bodendüseneinsatz 143 und die erste lonentauschersäule 2 sowie einen äußeren ringförmigen Abschnitt 118 für einen zweiten Bodendüseneinsatz 145 und die zweite lonentauschersäule 4 auf. Zwischen dem ersten Bodendüseneinsatz 143 und dem Bodenteil 103 ist ein erster Freiraum 101 ausgebildet. Zwischen dem zweiten Bodendüseneinsatz 145 und dem Bodenteil 103 ist ein zweiter Freiraum 102 angeordnet. Das Außenrohr 7 und das Innenrohr 15 definieren wie zur Vorrichtung 1 vorbeschrieben ein erstes Volumen 17 und ein zweites Volumen 19. Zur Anordnung des Innenrohrs 15 und des Außenrohrs 7 weist die Trägerplatte 114 eine innere ringförmige Trennwand 120 und eine äußere ringförmige Trennwand 122 auf, die ebenfalls einstückig mit dem Bodenteil 103 ausgebildet sind und die Trägerplatte 114 in die beiden vorbeschriebenen Abschnitte 116, 118 unterteilen. Unterseitig an der Trägerplatte 114 ist eine Verrippung 126 ausgebildet. Die Trägerplatte 114 weist im inneren Abschnitt 116 einen Anschlussstutzen 128 für die erste Zuleitung 21 auf. Durch den Anschlussstutzen 128 kann Fluid in eine Leitung 130 unterhalb der Trägerplatte 114 eingeleitet werden. Die Leitung 130 mündet in eine erste Öffnung beziehungsweise in einen ersten Auslass 132 der Trägerplatte 114, die dem ersten Bodendüseneinsatz 143 zugeordnet ist. Die Verrippung 126 und die Leitung 130 sind mit einem Bodendeckel 134 verschlossen. Die Strömungsrichtung A des Fluids durch die Bodendüseneinsätze 143, 145 bei regulären Betrieb ist mit gestrichelten Pfeilen angedeutet.

FIG. 12 zeigt, dass die Bodendüseneinsätze 143, 145 ringabschnittsförmige Segmente 144, 146 aufweisen, die mittels Verbindungsstücken 147, 148 aneinander und auf der Trägerplatte 114 befestigt sind. Der erste Bodendüseneinsatz 143 ist als ein geschlossener Ring aus vier ersten Segmenten 144 und vier ersten Verbindungsstücken 147 ausgebildet. Der zweite Bodendüseneinsatz 145 ist als offener Ring aus zehn zweiten Segmenten 146 und zehn zweiten Verbindungsstücken 148 ausgebildet. Die vorbeschriebenen Segmente 144, 146 des ersten und des zweiten Bodendüseneinsatzes 143, 145 unterscheiden sich im Wesentlichen lediglich in der Länge und der Krümmung. Dies gilt entsprechend auch für die Verbindungsstücke 147, 148. Die Verbindungsstücke 147, 148 weisen jeweils zwei Ösen 152 zur Befestigung an der Trägerplatte 114 auf.

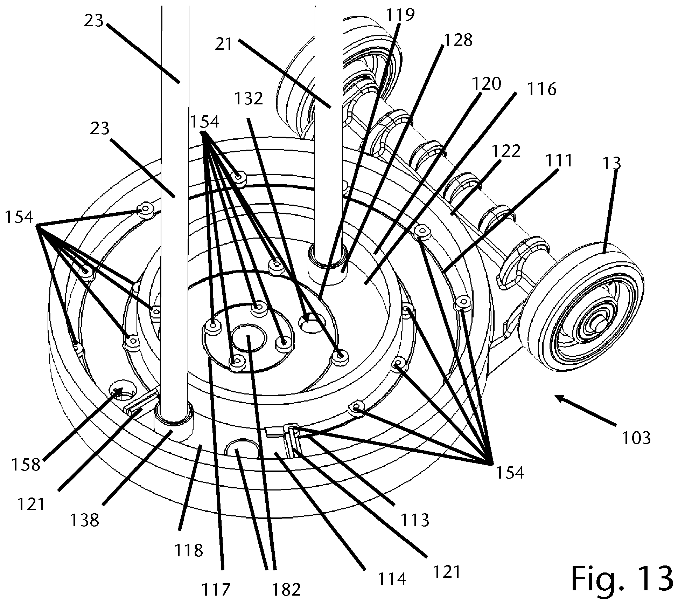

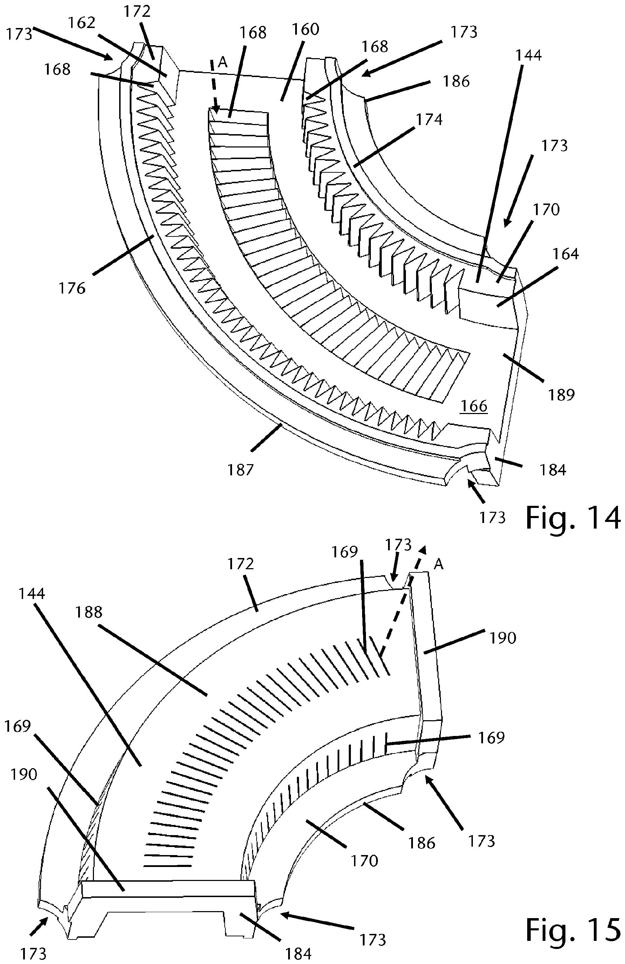

Wie in FIG. 13 gezeigt, weist die Trägerplatte 114 eine entsprechende Anzahl von Ösen 154 auf. Der äußere ringförmige Abschnitt 118 der Trägerplatte 114 weist zweiundzwanzig Ösen 154 auf. Der innere kreisförmige Abschnitt 116 der Trägerplatte 114 weist acht Ösen 154 auf. Die Trägerplatte 114 weist einen zweiten Anschlussstutzen 138 für die zweite Zuleitung 23 auf, welcher in einer nicht gezeigten Leitung unterhalb der Trägerplatte 114 mündet. Diese Leitung endet in einer zweiten Öffnung beziehungsweise in einem zweitem Auslass 158 der Trägerplatte 114, der dem Freiraum 102 zwischen dem Bodenteil 103 und dem zweiten Bodendüseneinsatz 145 zugeordnet ist, siehe FIG. 11. Die Trägerplatte 114 weist zwei Zentrieröffnungen für zwei Zentrierstopfen 182 auf, die am Bodendeckel 134 befestigt sind. Die Trägerplatte 114 weist zur verrutschsicheren Anlage der Bodendüseneinsätze 143, 145 vier Nuten 111, 113, 117, 119 für korrespondierende streifenförmige Vorsprünge 174, 176 der Bodendüseneinsätze 143, 145 auf, siehe FIG. 14. Die zwei Nuten 111, 113 an dem inneren kreisförmigen Abschnitt 116 sind als konzentrische Kreise ausgebildet. Die zwei Nuten 117, 119 an dem äußeren ringförmigen Abschnitt 118 sind als parallel verlaufende Kreisabschnitte ausgebildet. Zum seitlichen Verschließen des zweiten Bodendüseneinsatzes 145 sind an der Trägerplatte 114 zwei Endstücke 121 angeordnet, die die gegenüberliegenden Enden der Nuten 117, 119 quasi verbinden.

FIG. 14 zeigt, dass ein erstes Segment 144 des ersten Bodendüseneinsatzes 143 eine Nut 160 mit gegenüberliegenden Seitenwänden 162, 164 und einem diese verbindenden Boden 166 aufweist. Die Nut 160 ist auf der Anströmseite des Segments 144 ausgebildet. An den Seitenwänden 162, 164 und am Boden 166 sind eine Vielzahl von benachbarten streifenförmigen Öffnungen 168 ausgebildet. Die Öffnungen 168 weisen einen im Wesentlichen dreieckigen Querschnitt auf und laufen spitz zu. Die Segmente 144 weisen zwei Ränder 170, 172 auf. Der erste Rand 170 ragt von einem dem Boden 166 abgewandten Ende der inneren Seitenwand 164 nach außen und parallel zum Boden 166 weg. Die zweite Rand 172 ragt von dem dem Boden 166 abgewandten Ende der äußeren Seitenwand 162 nach außen und parallel zum Boden 166 weg. An den Rändern 170, 172 sind jeweils streifenförmige Vorsprünge 174, 176 für die Nuten 117, 119 der Trägerplatte 114 ausgebildet. Die Ränder 170, 172 weisen kreisabschnittsförmige Aussparungen 173 für die Ösen 154 der Trägerplatte 114 auf.

FIG. 15 zeigt, dass sich die streifenförmigen Öffnungen 168 zur gezeigten Abströmseite des Segments 144 hin, beziehungsweise in Strömungsrichtung A des Fluids, zu länglichen Schlitzen 169 verengen. Die Strömungsrichtung A ist mit gestrichelten Pfeilen gekennzeichnet, siehe auch FIG. 14. Beim normalen Betrieb der Vorrichtung 100 strömt ein von der in FIG. 14 gezeigten Anströmseite eingeleitetes Fluid durch die Schlitze 169 aus dem Bodendüseneinsatz 143 in die erste lonentauschersäule 2. Jedes Segment 144 weist zumindest zwei gerade Stirnseiten 184 und zwei gekrümmte Längsseiten 186, 187 auf, die eine Oberseite 188 und eine Unterseite 189 umrahmen. An den Stirnseiten 184 können beispielsweise vier Segmente 144 zu einem ringförmigen Düseneinsatz 143 aneinander angeordnet werden. Das Segment 144 weist zwei längliche, stirnseitig angeordnete Vorsprünge 190 auf, die rückseitig von der Nut 160 beziehungsweise von der Oberseite 188 abstehen.

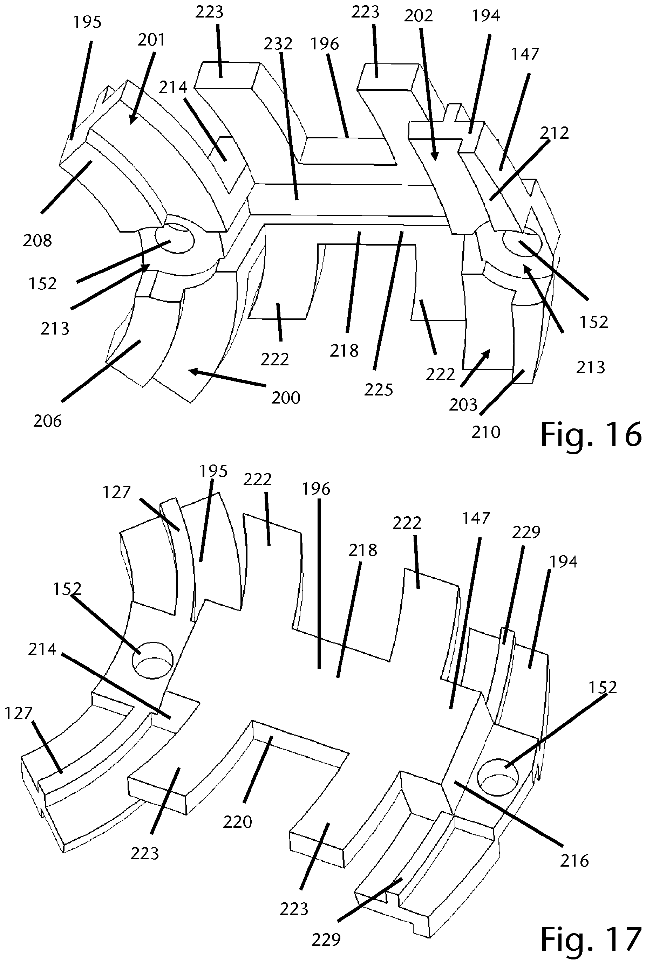

Die FIG. 16 zeigt, dass das Verbindungsstück 147 zwei Fußteile 194, 195 aufweist, die mittels eines brückenartigen Stegs 196 mit einem umgekehrten im Wesentlichen u-förmigen Querschnitt verbunden sind. An den Fußteilen 194, 196 ist jeweils eine Befestigungsöse 152 ausgebildet. Ferner weisen die Fußteile 194, 196 Aufnahmen 200, 201, 202, 203 für einen der Ränder 170, 172 des Segments 144 auf. Die Aufnahmen 200, 201 sind an dem Fußteil 195 ausgebildet. Die Aufnahmen 202, 203 sind am Fußteil 194 ausgebildet. Die Aufnahmen 200, 201, 202, 203 sind als Aussparungen ausgebildet. An den Fußteilen 194, 195 sind jeweils benachbart zu den Aufnahmen 200, 201, 202, 203 Anlageflächen 206, 208, 210, 212 zur Anordnung auf der Trägerplatte 114 ausgebildet. Zwischen den Anlageflächen 206, 208, 210, 212 und den Aufnahmen 200, 201, 202, 203 ist am Fußteil 194, 195 unterhalb der Befestigungsösen 152 jeweils eine Aussparung 213 für die Ösen 154 der Trägerplatte 114 ausgebildet. Um eine im Zusammenbau lagesichere Anordnung zweier Segmente 144 durch ein Verbindungsstück 147 zu realisieren, weist der Steg 196 unterseitig eine Aufnahme 232 auf, die mittig angeordnet ist und die die Aussparungen 213 miteinander verbindet und derart das Verbindungsstück 147 symmetrisch unterteilt. In dieser Aufnahme 232 sind zwei längliche Vorsprünge 190 der Segmente 144 formschlüssig anordenbar.

FIG. 17 zeigt, dass oberseitig an den Fußteilen 194, 195 des Verbindungsstücks 147 jeweils zwei längliche Verstärkungsstreben 227, 229 angeordnet sind. Der Steg 196 umfasst zwei seitlich angewinkelte Abschnitte 214, 216, die an einem Ende mit den Fußteilen 194, 195 verbunden sind. Der Steg umfasst 196 ferner einen Verbindungsabschnitt 218, der die angewinkelten Abschnitte 214, 216 miteinander verbindet. Der Verbindungsabschnitt 218 umfasst zwei Stirnseiten 220. An diesen Stirnseiten 220 sind jeweils zwei Paar voneinander beabstandete Stützabschnitte 222, 223 angeordnet. Die Stützabschnitte 222, 223 sind im Wesentlichen als gebogene Quader ausgebildet, die von den Stirnseiten 220 des Verbindungsabschnitts 218 hervorstehen. Die Unterseite 225 der Stützabschnitte 222, 223 und des Verbindungsabschnitts 218 dient zur Anlage für die in FIG. 15 gezeigte Oberseite 188 des Segments 144, siehe FIG. 16.

Die Segmente 146 des zweiten in FIG. 11 und 12 gezeigten Bodendüseneinsatzes 145 unterscheiden sich von den Segmenten 144 des ersten Bodendüseneinsatzes 143 im Wesentlichen nur in der Dimensionierung und Krümmung. Dies gilt entsprechend auch für die Verbindungstücke 148 des zweiten Bodendüseneinsatzes 145. Diese weisen im Unterschied zu den Verbindungstücken 147 ferner ein Paar kurze Stützabschnitte 141 und ein Paar lange Stützabschnitte 149 auf, siehe FIG. 11 und 12.

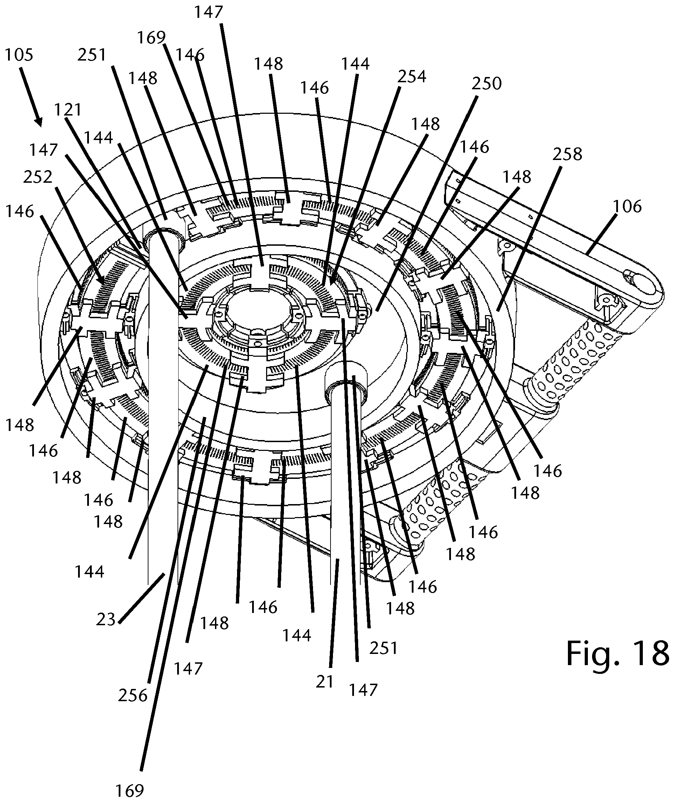

FIG. 18 zeigt, dass das Deckelteil 105 eine Anordnung von Trägerplatte 250 und Deckeldüseneinsätzen 252, 254 aufweist, die in Bezug auf die Bodendüseneinsätze 143, 145 und die Trägerplatte 114 am Bodenteil 103 im Wesentlichen spiegelbildlich angeordnet ist, siehe FIG. 11, FIG. 12 und FIG. 13. Die Deckeldüseneinsätze 252, 254 umfassen die gleichen Segmente 144, 146 und Verbindungstücke 147, 148 wie die vorbeschriebenen Bodendüseneinsätze 143, 145. Der erste innere kreisförmige Deckeldüseneinsatz 254 ist wie der erste innere Bodendüseneinsatz 143 ausgebildet. Der zweite äußere bogenförmige Deckeldüseneinsatz 252 ist wie der zweite äußere Bodendüseneinsatz 145 ausgebildet. An der Trägerplatte 250 sind wie bei der Trägerplatte 114 der Bodenplatte 103 Endstücke 121 zum seitlichen Verschließen des Deckeldüseneinsatzes 254 angeordnet. Die Trägerplatte 250 des Deckelteils 105 weist wie die Trägerplatte 114 des Bodenteils 103 nicht gezeigte Befestigungsösen für die Deckeldüseneinsätze 252, 254. Die Trägerplatte 250 weist zwei Anschlussstutzen 251 für die Zuleitungen 21, 23 auf. Wie die Trägerplatte 114 der Bodenteils 103 weist die Trägerplatte 250 eine innere ringförmige Trennwand 256 und eine äußere ringförmige Trennwand 258 auf. Das Deckelteil 105 ist im Wesentlichen spiegelverkehrt wie das Bodenteil 103 ausgebildet. Die Trägerplatte 250 weist aber keine Zentrieröffnungen auf. Die in FIG. 10 gezeigte Abdeckplatte 112 des Deckelteils 105 dient wie der Bodendeckel 134 beim Bodenteil 103 dazu, eine nichtgezeigte Verrippung und nichtgezeigte Leitungen zu verdecken, die an der nichtgezeigten Oberseite der Trägerplatte 250 ausgebildet sind.

Bei der Deionisation wird Fluid über eine nicht gezeigte Eingangsleitung im Deckelteil 105 in die erste Zuleitung 21 zum Bodenteil 103 geleitet. Über die Leitung 130 und den Auslass 132 in der Trägerplatte 114 des Bodenteils 103 gelangt das Fluid dann in den ersten Freiraum 101 zwischen der Trägerplatte 114 des Bodenteils 103 und dem Bodendüseneinsatz 143. Durch die Schlitze 169 des Bodendüseneinsatzes 143 strömt das Fluid in die erste Ionentauschersäule 2 und steigt zu dem ersten Deckeldüseneinsatz 252 auf. Über die Schlitze 169 des Deckeldüseneinsatzes 252 strömt das Fluid in einen Freiraum zwischen dem Deckeldüseneinsatz 252 und der Trägerplatte 250 des Deckelteils 105. Durch eine nicht gezeigte Öffnung in der Trägerplatte 250 strömt das Fluid dann in eine nicht gezeigte Überströmleitung 25 (FIG. 6) und von dort in die zweite Zuleitung 23, die der zweiten lonentauschersäule 4 zugeordnet ist. Durch den Auslass 158 gelangt das Fluid dann in den zweiten Freiraum 102 zwischen der Trägerplatte 114 und dem zweiten Bodendüseneinsatz 145. Das über die Schlitze 169 des zweiten Bodendüseneinsatzes 145 in die zweite lonentauschersäule 4 eingeleitete Fluid steigt dann zu dem Deckeldüseneinsatz 254 auf und gelangt dort über die Schlitze 169 des Deckeldüseneinsatzes 254 in einen Freiraum zwischen Trägerplatte 250 und Deckeldüseneinsatz 252 und von dort über eine nicht gezeigte Öffnung zu einer nicht gezeigten Ausgangsleitung. Bei der Regeneration verläuft die Strömungsrichtung entgegengesetzt. Das Regenerationsfluid, beziehungsweise die Regenerationsfluide werden über die Schlitze 169 der Deckeldüseneinsätze 252, 254 gleichmäßig verteilt in die lonentauschersäulen 2, 4 eingeleitet.

## Patentansprüche

1. Vorrichtung (100) zur Reinigung zumindest eines Fluids, umfassend eine erste lonentauschersäule (2), eine Eingangsleitung (9) und eine Ausgangsleitung (11), wobei
- die Eingangsleitung (9) und die Ausgangsleitung (11) einem Deckelteil (105) zugeordnet sind,
- die Eingangsleitung (9) mit einer ersten Zuleitung (21) in einen ersten Freiraum (101) zwischen einem Bodenteil (103) und mindestens einem Düseneinsatz (143) verbunden ist, der als ein erster Bodendüseneinsatz (143) ausgebildet ist,
- der erste Bodendüseneinsatz (143) eine Anzahl von Öffnungen (168) zur Durchleitung des Fluids aufweist,
- die Öffnungen (168) über zumindest eine Teilfläche des ersten Bodendüseneinsatzes (143) verteilt sind, mittels derer das Fluid in ein mit einem lonentauscherharz befüllbares erstes Volumen (17) der lonentauschersäule (2) einleitbar ist,
- der erste Bodendüseneinsatz (143) zumindest zwei Segmente (144) umfasst, die aneinander befestigt sind,
- zumindest ein Segment (144) zumindest einen Rand (170, 172) und/oder zumindest einen Vorsprung (190) aufweist, um eine stabile Anordnung der Segmente (144) durch Formschluss zu ermöglichen, und/oder
- der erste Bodendüseneinsatz (143) zumindest ein Verbindungsstück (147, 148) aufweist und zumindest zwei Segmente (144) mittels des Verbindungsstücks (147, 148) aneinander befestigt sind.

2. Vorrichtung (100) nach Anspruch 1, wobei die zumindest zwei Segmente (144) ringabschnittsförmig oder kreisabschnittsförmig sind.

3. Vorrichtung (100) nach einem oder mehreren der Ansprüche 1 bis 2, wobei
- an dem Deckelteil (105) mindestens ein Düseneinsatz (254) angeordnet ist, der als ein erster Deckeldüseneinsatz (254) ausgebildet ist;
- der erste Deckeldüseneinsatz (254) zumindest zwei ringabschnittsförmige oder kreisabschnittsförmige Segmente (144) umfasst, die aneinander befestigt sind;
- der erste Deckeldüseneinsatz (254) zumindest ein Verbindungsstück (147, 148) aufweist,
- zumindest zwei Segmente (144, 146) mittels des Verbindungsstücks (147, 148) aneinander befestigt sind.

4. Vorrichtung (100) nach einem oder mehreren der Ansprüche 1 bis 3, wobei
- zumindest ein Düseneinsatz (143, 145, 252, 254) oder mindestens ein Segment (144, 146) zumindest eine Nut (160) mit einer ersten Seitenwand (162), einer dieser gegenüberliegenden zweiten Seitenwand (164) und einem die Seitenwände (162, 164) verbindenden Boden (166) umfasst;
- die Öffnungen (168) an der ersten Seitenwand (162), der zweiten Seitenwand (164) und/oder dem Boden (166) der Nut (160) ausgebildet sind.

5. Vorrichtung (100) nach einem oder mehreren der vorherigen Ansprüche, wobei
- die Öffnungen (168) zumindest teilweise in einer Strömungsrichtung (A) einen sich verengenden Querschnitt aufweisen;
- sich die Öffnungen (168) in der Strömungsrichtung (A) zu Schlitzen (169) verengen.

6. Vorrichtung (100) nach einem oder mehreren der vorherigen Ansprüche, wobei
- die Vorrichtung (100) zumindest zwei ineinander geschachtelte Ionentauschersäulen (2, 4) aufweist;
- die Vorrichtung ein Bodenteil (3, 103) und ein Deckelteil (5, 105) umfasst, zwischen denen zumindest ein Innenrohr (15) und ein Außenrohr (7) angeordnet ist,
- das Innenrohr (15) im Außenrohr (7) angeordnet ist,
- eine erste lonentauschersäule (2) das erste Volumen (17) des Innenrohrs (15) umfasst, und
- eine zweite lonentauschersäule (4) ein zwischen Innenrohr (15) und Außenrohr (7) vorhandenes zweites Volumen (19) umfasst;
- das Deckelteil (105) eine Überströmleitung (25) aufweist, die das erste Volumen (17) mit dem zwischen Innenrohr (15) und Außenrohr (7) vorhandenen zweiten Volumen (19) verbindet;
- die Überströmleitung (25) zwei verschließbare Durchgänge (27, 29) aufweist,
- ein erster Durchgang (27) dem ersten Volumen (17) und ein zweiter Durchgang (29) dem zweiten Volumen (19) zugeordnet ist.

7. Düseneinsatz (143, 145, 252, 254) für zumindest eine lonentauschersäule (2, 4), aufweisend
- eine Anzahl von Öffnungen (168), die über zumindest eine Teilfläche des Düseneinsatzes (143, 145, 252, 254) verteilt sind und mittels derer ein Fluid in ein mit einem lonentauscherharz befüllbares Volumen (17, 19) der lonentauschersäule (2, 4) einleitbar ist,
- zumindest zwei Segmente (144, 146), die aneinander befestigt sind;
wobei
- zumindest ein Segment (144) zumindest einen Rand (170, 172) und/oder zumindest einen Vorsprung (190) aufweist, um eine stabile Anordnung der Segmente (144) durch Formschluss zu ermöglichen, und/oder
- der Düseneinsatz (143, 145, 252, 254) zumindest ein Verbindungsstück (147, 148) aufweist und zumindest zwei Segmente (144, 146) mittels des Verbindungsstücks (147, 148) aneinander befestigt sind.

8. Düseneinsatz (143, 145, 252, 254) nach Anspruch 7, wobei die zumindest zwei Segmente (144) ringabschnittsförmig oder kreisabschnittsförmig sind.

9. Düseneinsatz (143, 145, 252, 254) nach einem oder mehreren der Ansprüche 7 bis 8, wobei
- der Düseneinsatz (143, 145, 252, 254) oder zumindest ein Segment (144, 146) eine Nut (160) mit einer ersten Seitenwand (162), einer dieser gegenüberliegenden zweiten Seitenwand (164) und einem die Seitenwände (162, 164) verbindenden Boden (166) umfasst;
- die Öffnungen (168) an der ersten Seitenwand (162), der zweiten Seitenwand (164) und/oder dem Boden (166) der Nut (160) ausgebildet sind.

10. Düseneinsatz (143, 145, 252, 254) nach einem oder mehreren der Ansprüche 7 bis 9, wobei
- die Öffnungen (168) in einer Strömungsrichtung (A) einen sich verengenden Querschnitt aufweisen;
- sich die Öffnungen (168) in der Strömungsrichtung (A) zu Schlitzen (169) verengen.

11. Verfahren zur Deionisierung eines Fluides mittels einer Vorrichtung (100) nach einem oder mehreren der Ansprüche 1 bis 6, wobei
- das Fluid ohne ein lonentauschen durch die erste Zuleitung (21) durch das mit einem lonentauscherharz befüllte erste Volumen (17) durchgeleitet wird,
- das Fluid dann anschließend in das erste Volumen (17) zum lonentauschen eingeleitet wird.

12. Verfahren nach Anspruch 11, wobei
- das Fluid in die Eingangsleitung (9) eingeleitet wird,
- das Fluid durch die erste Zuleitung (21) in den ersten Freiraum (101) geleitet wird,
- mittels der Öffnungen (168) das Fluid in das erste Volumen (17) eingeleitet wird, so dass das Fluid durch die erste lonentauschersäule (2) strömt.

13. Verfahren nach einem oder mehreren der Ansprüche 11 bis 12, wobei
- das Fluid ohne ein lonentauschen durch ein mit einem lonentauscherharz befülltes zweites Volumen (19) einer zweiten lonentauschersäule (2) durchgeleitet wird,
- das Fluid dann anschließend in das zweite Volumen (19) zum lonentauschen eingeleitet wird;
- das Fluid über eine Überströmleitung (25) in eine zweite Zuleitung (23) geleitet wird,
- die zweite Zuleitung (23) in einem zweiten Freiraum (102) zwischen einem Bodenteil (103) und einem als zweiten Bodendüseneinsatz (145) ausgebildeten Düseneinsatz (145) mündet, und
- der zweite Bodendüseneinsatz (145) eine Anzahl von Öffnungen (168) aufweist, die über zumindest eine Teilfläche des zweiten Bodendüseneinsatzes (145) verteilt sind und mittels derer das Fluid in das zweite Volumen (19) eingeleitet wird, so dass das Fluid durch die zweite lonentauschersäule (4) strömt.

14. Verwendung einer Vorrichtung (100), die gemäß einem oder mehreren der Ansprüche 1 bis 6 ausgebildet ist, in einem Verfahren, das gemäß einem oder mehreren der Ansprüche 11 bis 13 ausgebildet ist.

## Claims

1. Device (100) for purifying at least one fluid, comprising a first ion exchange column (2), an inlet line (9) and an outlet line (11), wherein
- the inlet line (9) and the outlet line (11) are associated with a cover part (105),
- the inlet line (9) is connected to a first supply line (21) into a first free space (101) between a bottom part (103) and at least one nozzle insert (143), which is formed as a first bottom nozzle insert (143),
- the first bottom nozzle insert (143) has a number of openings (168) for the passage of the fluid,
- the openings (168) are distributed over at least a partial surface of the bottom nozzle insert (143), by means of which the fluid can be introduced into a first volume (17) of the ion exchange column (2) which can be filled with an ion exchange resin,
- the first bottom nozzle insert (143) comprises at least two segment parts (144) that are attached to each other,
- at least one segment part (144) has at least one edge (170, 172) and/or at least one projection (190) to enable a stable arrangement of the segment parts (144) by positive locking, and/or
- the first bottom nozzle insert (143) comprises at least one connecting piece (147, 148) and at least two segment parts (144) are attached to each other by means of the connecting piece (147, 148).

2. Device (100) according to claim 1, wherein the at least two segment parts (144) are ring section-shaped or circular section-shaped.

3. Device (100) according to one or more of the claims 1 to 2, wherein
- at least one nozzle insert (254) is arranged on the cover part (105), which is formed as a first cover nozzle insert (254);
- the first cover nozzle insert (254) comprises at least two ring section-shaped or circular section-shaped segment parts (144) that are attached to each other;
- the first cover nozzle insert (254) has at least one connecting piece (147, 148);
- at least two segment parts (144, 146) are attached to each other by means of the connecting piece (147, 148).

4. Device (100) according to one or more of claims 1 to 3, wherein
- at least one nozzle insert (143, 145, 252, 254) or at least one segment part (144, 146) comprises at least one groove (160) having a first side wall (162), a second side wall (164) opposite thereto, and a bottom (166) connecting the side walls (162, 164);
- the openings (168) are formed on the first side wall (162), the second side wall (164) and/or the bottom (166) of the groove (160).

5. Device (100) according to one or more of the preceding claims, wherein
- the openings (168) have at least partially a narrowing cross-section in a flow direction (A);
- the openings (168) narrow into slots (169) in the flow direction (A).

6. Device (100) according to one or more of the preceding claims, wherein
- the device (100) comprises at least two interleaved ion exchange columns (2, 4);
- the device comprises a bottom part (3, 103) and a cover part (5, 105) between which at least an inner tube (15) and an outer tube (7) are arranged,
- the inner tube (15) is arranged in the outer tube (7),
- a first ion exchange column (2) comprises the first volume (17) of the inner tube (15), and
- a second ion exchange column (4) comprises a second volume (19) present between the inner tube (15) and the outer tube (7);
- the cover part (105) comprises an overflow line (25) connecting the first volume (17) to the second volume (19) present between the inner tube (15) and the outer tube (7);
- the overflow line (25) comprises two closable passages (27, 29);
- a first passage (27) is associated with the first volume (17) and a second passage (29) is associated with the second volume (19).

7. Nozzle insert (143, 145, 252, 254) for at least one ion exchange column (2, 4), having
- a number of openings (168) which are distributed over at least a partial surface of the nozzle insert (143, 145, 252, 254) and by means of which a fluid can be introduced into a volume (17, 19) of the ion exchange column (2, 4) which can be filled with an ion exchange resin,
- at least two segment parts (144, 146) that are attached to each other,
wherein
- at least one segment part (144) has at least one edge (170, 172) and/or at least one projection (190) to enable a stable arrangement of the segment parts (144) by positive locking, and/or
- the nozzle insert (143, 145, 252, 254) has at least one connecting piece (147, 148), and at least two segment parts (144, 146) are attached to each other by means of the connecting piece (147, 148).

8. Nozzle insert (143, 145, 252, 254) according to claim 7, wherein the at least two segment parts (144) are ring section-shaped or circular section-shaped.

9. Nozzle insert (143, 145, 252, 254) according to one or more of claims 7 to 8, wherein
- the nozzle insert (143, 145, 252, 254) or at least one segment part (144, 146) comprises a groove (160) having a first side wall (162), a second side wall (164) opposite thereto, and a bottom (166) connecting the side walls (162, 164);
- the openings (168) are formed on the first side wall (162), the second side wall (164) and/or the bottom (166) of the groove (160).

10. Nozzle insert (143, 145, 252, 254) according to one or more of claims 7 to 9, wherein
- the openings (168) have a narrowing cross section in a flow direction (A);
- the openings (168) narrow into slots (169) in the flow direction (A).

11. Method of deionizing a fluid by means of a device (100) according to one or more of claims 1 to 6, wherein
- the fluid is passed without ion exchange through the first supply line (21) through the first volume (17) which first volume (17) is filled with an ion exchange resin;
- the fluid is then introduced into the first volume (17) for ion exchange.

12. Method according to claim 11, wherein
- the fluid is introduced into said inlet line (9),
- the fluid is directed through the first supply line (21) into the first free space (101),
- by means of the openings (168) the fluid is introduced into the first volume (17), so that the fluid flows through the first ion exchange column (2).

13. Method according to one or more of the claims 11 to 12, wherein
- the fluid is passed without ion exchange through a second volume (19) of a second ion exchange column (2) which second volume (19) is filled with an ion exchange resin;
- the fluid is then introduced into the second volume (19) for ion exchange;
- the fluid is introduced via an overflow line (25) into a second supply line (23);
- the second supply line (23) opens into a second free space (102) between a bottom part (103) and a nozzle insert (145) formed as a second bottom nozzle insert (145), and
- the second bottom nozzle insert (145) has a number of openings (168) which are distributed over at least a partial surface of the second bottom nozzle insert (145) and by means of which the fluid is introduced into the second volume (19), so that the fluid flows through the second ion exchange column (4).

14. Use of a device (100) configured according to one or more of claims 1 to 6 in a method configured according to one or more of claims 11 to 13.

## Revendications

1. Dispositif (110) pour la purification d'au moins un fluide, comprenant une première colonne d'échange d'ions (2), une conduite d'entrée (9) et une conduite de sortie (11), dans laquelle
- la conduite d'entrée (9) et la conduite de sortie (11) sont associées à un élément de couvercle (105),
- la conduite d'entrée (9) est raccordée à une première conduite d'alimentation (21) dans un premier espace libre (101) entre un élément de fond (103) et au moins un insert de buse (143) qui est configuré comme un premier insert de buse de fond (143),
- le premier insert de buse de fond (143) présente une multitude d'ouvertures (168) pour le passage du fluide,
- les ouvertures (168) sont réparties sur au moins une surface partielle du premier insert de buse de fond (143) au moyen de laquelle le fluide peut être introduit dans un premier volume (17) de la colonne d'échange d'ions (2) pouvant être rempli avec une résine échangeuse d'ions,
- le premier insert de buse de fond (143) comprend au moins deux segments (144) qui sont fixés l'un à l'autre,
- au moins un segment (144) présente au moins une bordure (170, 172) et/ou au moins une proéminence (190) pour permettre un agencement stable des segments (144) par complémentarité de formes et/ou
- le premier insert de buse de fond (143) présente au moins une pièce de raccordement (147, 148) et au moins deux segments (144) sont fixés l'un à l'autre au moyen de la pièce de raccordement (147, 148).

2. Dispositif (100) selon la revendication 1, dans lequel au moins deux segments (144) sont en forme de segment d'anneau ou de segment de cercle.

3. Dispositif (100) selon une ou plusieurs des revendications 1 à 2, dans lequel
- sur l'élément de couvercle (105) est disposé au moins un insert de buse (254) qui est configuré comme un premier insert de buse de couvercle (254),
- le premier insert de buse de couvercle (254) comprend au moins deux segments en forme de segment d'anneau ou de segment de cercle (144) qui sont fixés l'un à l'autre,
- le premier insert de buse de couvercle (254) présente au moins une pièce de raccordement (147, 148),
- au moins deux segments (144, 146) sont fixés l'un à l'autre au moyen de la pièce de raccordement (147, 148).

4. Dispositif (100) selon une ou plusieurs des revendications 1 à 3, dans lequel
- au moins un insert de buse (143, 145, 252, 254) ou au moins un segment (144, 146) comprend au moins une rainure (160) avec une première paroi latérale (162), une deuxième paroi latérale (164) opposée à celle-ci et un fond (166) reliant les parois latérales (162, 164) et
- les ouvertures (168) sont formées sur la première paroi latérale (162), la deuxième paroi latérale (164) et/ou le fond (166) de la rainure (160).

5. Dispositif (100) selon une ou plusieurs des revendications précédentes, dans lequel
- les ouvertures (168) présentent au moins partiellement une section transversale se rétrécissant dans une direction d'écoulement (A) et
- les ouvertures (168) se rétrécissent en forme de fentes (169) dans la direction d'écoulement (A).

6. Dispositif (100) selon une ou plusieurs des revendications précédentes,
- ce dispositif (100) présentant au moins deux colonnes d'échange d'ions (2, 4) imbriquées l'une dans l'autre,
- ce dispositif présentant un élément de fond (3, 103) et un élément de couvercle (5, 105) entre lesquels au moins un tuyau intérieur (15) et un tuyau extérieur (7) est disposé,
- le tuyau intérieur (15) étant disposé dans le tuyau extérieur (7),
- une première colonne d'échange d'ions (2) comprenant le premier volume (17) du tuyau intérieur (15) et
- une deuxième colonne d'échange d'ions (4) comprenant un deuxième volume (19) situé entre le tuyau intérieur (15) et le tuyau extérieur (7),
- l'élément de couvercle (105) présentant une conduite de décharge (25) qui relie le premier volume (17) au deuxième volume (19) situé entre le tuyau intérieur (15) et le tuyau extérieur (7) et
- la conduite de décharge (25) présentant deux passages obturables (27, 29),
- un premier passage (27) étant associé au premier volume (17) et un deuxième passage (29) au deuxième volume (19).

7. Insert de buse (143, 145, 252, 254) pour au moins une colonne d'échange d'ions (2, 4) présentant
- une multitude d'ouvertures (168) qui sont réparties sur au moins une surface partielle de l'insert de buse (143, 145, 252, 254) et au moyen desquelles un fluide peut être introduit dans un volume (17, 19) pouvant être rempli de résine échangeuse d'ions de la colonne d'échange d'ions (2, 4) et
- au moins deux segments (144, 146) qui sont fixés l'un à l'autre,
- au moins un segment (144) présentant au moins une bordure (170, 172) et/ou au moins une proéminence (190) pour permettre un agencement stable des segments (144) par complémentarité de formes et/ou
- l'insert de buse (143, 145, 252, 254) présentant au moins une pièce de raccordement (147, 148) et au moins deux segments (144) étant fixés l'un à l'autre au moyen de la pièce de raccordement (147, 148).

8. Insert de buse (143, 145, 252, 254) selon la revendication 7, dans lequel les au moins deux segments (144) sont en forme de segment d'anneau ou de segment de cercle.

9. Insert de buse (143, 145, 252, 254) selon une ou plusieurs des revendications 7 à 8,
- cet insert de buse (143, 145, 252, 254) ou au moins un segment (144, 146) comprenant au moins une rainure (160) avec une première paroi latérale (162), une deuxième paroi latérale (164) opposée à celle-ci et un fond (166) reliant les parois latérales (162, 164) et
- les ouvertures (168) étant formées sur la première paroi latérale (162), la deuxième paroi latérale (164) et/ou le fond (166) de la rainure (160).

10. Insert de buse (143, 145, 252, 254) selon une ou plusieurs des revendications 7 à 9, dans lequel
- les ouvertures (168) présentent une section transversale se rétrécissant dans une direction d'écoulement (A) et
- les ouvertures (168) se rétrécissent en forme de fentes (169) dans la direction d'écoulement (A).

11. Procédé de déionisation d'un fluide au moyen d'un dispositif (100) selon une ou plusieurs des revendications 1 à 6, selon lequel
- le fluide est conduit sans échange d'ions par la première conduite d'alimentation (21) à travers le premier volume (17) rempli d'une résine échangeuse d'ions et
- le fluide est ensuite introduit dans le premier volume (17) pour l'échange d'ions.

12. Procédé selon la revendication 11, selon lequel
- le fluide est introduit dans la conduite d'entrée (9),
- le fluide est conduit par la première conduite d'alimentation (21) dans le premier espace libre 101) et
- le fluide est introduit par les ouvertures (168) dans le premier volume (17), de sorte que le fluide s'écoule à travers la première colonne d'échange d'ions (2).

13. Procédé selon une ou plusieurs des revendications 11 à 12, selon lequel
- le fluide est conduit sans échange d'ions à travers un deuxième volume (19) rempli de résine échangeuse d'ions d'une deuxième colonne d'échange d'ions (2),
- le fluide est ensuite introduit dans le deuxième volume (19) pour l'échange d'ions,
- le fluide est introduit par une conduite de décharge (25) dans une deuxième conduite d'alimentation (23),
- la deuxième conduite d'alimentation (23) débouche dans un deuxième espace libre (102) entre un élément de fond (103) et un insert de buse (145) configuré comme un deuxième insert de buse de fond (145) et
- le deuxième insert de buse de fond (145) présente une multitude d'ouvertures (168) qui sont réparties sur au moins une surface partielle du deuxième insert de buse de fond (145) au moyen de laquelle le fluide est introduit dans le deuxième volume (19), de sorte que le fluide s'écoule à travers la deuxième colonne d'échange d'ions (4).

14. Utilisation d'un dispositif (100) qui est configuré selon une ou plusieurs des revendications 1 à 6, dans un procédé qui est configuré selon une ou plusieurs des revendications 11 à 13.
